(19) **Europäisches Patentamt**
**European Patent Office**
**Office européen des brevets**

(11) **EP 4 615 057 A1**

(12) **EUROPEAN PATENT APPLICATION**
published in accordance with Art. 153(4) EPC

(43) Date of publication:
**10.09.2025 Bulletin 2025/37**

(21) Application number: **23886326.0**

(22) Date of filing: **02.11.2023**

(51) International Patent Classification (IPC):
**H04W 48/10** (2009.01)   **H04W 56/00** (2009.01)
**H04W 24/08** (2009.01)   **H04L 5/00** (2006.01)
**H04W 72/04** (2023.01)

(52) Cooperative Patent Classification (CPC):
**H04L 5/00; H04W 24/08; H04W 48/10;**
**H04W 56/00; H04W 72/04**

(86) International application number:
**PCT/KR2023/017414**

(87) International publication number:
**WO 2024/096631 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.11.2022 US 202263422909 P**

(71) Applicant: **LG Electronics Inc.**
**Yeongdeungpo-gu**
**Seoul 07336 (KR)**

(72) Inventors:
• **KIM, Jaehyung**
 **Seoul 06772 (KR)**
• **YANG, Suckchel**
 **Seoul 06772 (KR)**
• **KIM, Seonwook**
 **Seoul 06772 (KR)**
• **LEE, Youngdae**
 **Seoul 06772 (KR)**
• **LEE, Sunghoon**
 **Seoul 06772 (KR)**

(74) Representative: **Plasseraud IP**
**104 Rue de Richelieu**
**CS92104**
**75080 Paris Cedex 02 (FR)**

(54) **METHOD FOR SSB-BASED MEASUREMENT IN WIRELESS COMMUNICATION SYSTEM, AND DEVICE FOR SAME**

(57)   A method, according to one embodiment of the present disclosure, comprises: a step of receiving configuration information related to measurement; and a step of reporting measurement information based on SSBs. Each SSB comprises: i) an SSS and a PSS related to a cell search; and ii) a PBCH. On the basis of the configuration information, the measurement information is determined on the basis of a DMRS for the PBCH, in addition to the SSS. The configuration information is characterized by comprising resource region information related to the PBCH and/or power boosting information related to the PBCH.

【FIG. 13】

EP 4 615 057 A1

**Description**

[TECHNICAL FIELD]

The present disclosure relates to a method for SSB-based measurement in a wireless communication system, and a device for the same.

[BACKGROUND]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

In order to efficiently support various use cases in 5G in terms of cost/complexity, a maximum bandwidth of newly introduced user equipment (UE) types may be reduced. If the maximum bandwidth is reduced (e.g., 3 MHz), there may be cases where the UE cannot receive the entire synchronization signal/physical broadcast channel block (SSB).

For example, a time-frequency structure of an existing SSB may be defined as 240 consecutive subcarriers within four OFDM symbols. When a channel bandwidth is reduced from 5 MHz to 3 MHz, the UE can receive both PSS and SSS within the channel bandwidth, but cannot receive the entire PBCH. In other words, when a subcarrier spacing is 15 KHz in the existing time-frequency structure, a frequency domain for the PBCH is 3.6 MHz (240*1.5KHz). Since the frequency domain for receiving the PBCH is greater than 3 MHz, the UE cannot receive the PBCH transmitted in the domain exceeding 3 MHz.

PBCH DMRS can be utilized in addition to SSS for calculation of SS-RSRP and SS-SINR. At this time, when measurement is performed based on SSBs transmitted in a reduced bandwidth, a configuration for utilizing the PBCH DMRS is required.

[DISCLOSURE]

[TECHNICAL PROBLEM]

To solve a problem of receiving only a portion of SSB (PSS + SSS + PBCH) when the channel bandwidth is reduced as described above, SSB can be transmitted based on a different resource area and/or energy per element (EPRE) than the conventional art. In such a case, accuracy of measurement performed in the same scheme as the conventional art may be reduced.

The present disclosure proposes a method for supporting measurement based on an SSB(s) transmitted in a reduced bandwidth.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) in a wireless communication system according to an embodiment of the present disclosure comprises receiving configuration information related to measurement, and reporting measurement information based on synchronization signal/physical broadcast channel (SS/PBCH) blocks (SSBs).

Each SSB includes i) a primary synchronization signal (PSS) and a secondary synchronization signal (SSS) related to a cell search; and ii) a PBCH.

The measurement information is determined based on the SSS.

The measurement information is determined based on a demodulation reference signal (DMRS) for the PBCH in addition to the SSS based on the configuration information.

The configuration information includes resource region information related to the PBCH and/or power boosting information related to the PBCH.

The resource region information related to the PBCH may include information related to at least one of i) a

resource region related to puncturing based on a channel bandwidth, ii) a resource region in which the PBCH is additionally transmitted, and/or iii) a resource region related to repetition of the SSB based on a same beam.

Based on the channel bandwidth, each SSB may be received within a resource region based on 240 contiguous subcarriers based on subcarrier numbers 0 to 239 within four OFDM symbols based on orthogonal frequency division multiplexing (OFDM) symbol numbers 0 to 3.

Based on the channel bandwidth being 3 MHz: each SSB may be received in a resource region within the four OFDM symbols in which some of the 240 contiguous subcarriers are punctured. The resource region may include resource blocks (RBs).

One RB may be defined as 12 consecutive subcarriers in a frequency domain.

The 12 RBs may be remaining RBs, excluding 8 RBs based on the subcarriers related to the puncturing, among the 20 RBs based on the 240 contiguous subcarriers.

The resource region related to the puncturing may be related to i) the subcarriers related to the puncturing and/or ii) the remaining RBs.

The subcarriers related to the puncturing may include first subcarriers and second subcarriers.

Based on a number of first subcarriers and a number of second subcarriers being the same as each other: the first subcarriers may be based on subcarrier numbers 0 to 47, and the second subcarriers may be based on subcarrier numbers 192 to 239.

Based on the number of first subcarriers and the number of second subcarriers being different from each other: the first subcarriers may include subcarriers with a subcarrier number smaller than a subcarrier number based on a center frequency position of the channel bandwidth, and the second subcarriers may include subcarriers with a subcarrier number larger than the subcarrier number based on the center frequency position of the channel bandwidth.

Based on the channel bandwidth being equal to or larger than 5 MHz, each SSB may be received in a resource region based on the 240 contiguous subcarriers.

The channel bandwidth may be related to the cell search.

The channel bandwidth may be one of the UE channel bandwidths (MHz) defined for each operating band. The UE channel bandwidths (MHz) may include at least one of 3, 5, 10, 15, 20, 25, 30, 35, 40, 45, 50, 60, 70, 80, 90, and/or 100.

The SSBs may be based on SSBs transmitted within a half-frame.

The measurement information may include at least one of i) SS-reference signal received power (SS-RSRP) and/or ii) SS-signal to noise and interference ratio (SS-SINR).

The configuration information may be received based on an RRC message or a system information block (SIB).

The measurement may include intra-frequency measurement and/or inter-frequency measurement.

Information related to the resource region in which the PBCH is additionally transmitted may include a symbol offset. The resource region in which the PBCH is additionally transmitted may be determined based on a first symbol index related to each SSB and the symbol offset.

Power boosting information related to the PBCH may include a power offset based on the channel bandwidth. Based on the channel bandwidth being 3 MHz, an energy per resource element (EPRE) related to the PBCH may be determined based on i) an EPRE related to the SSS and ii) the power offset.

A resource region related to repetition of the SSB may be determined based on first symbol indexes for candidate SSBs within the half-frame. A number of SSBs transmitted based on the same beam among the candidate SSBs may be larger than 2.

A user equipment (UE) operating in a wireless communication system according to another embodiment of the present disclosure comprises one or more transceivers, one or more processors, and one or more memories connected to the one or more processors and storing instructions.

The instructions, based on being executed by the one or more processors, configure the one or more processors to perform all steps of any one of methods performed by the UE.

A device according to another embodiment of the present disclosure comprises one or more memories and one or more processors operably connected to the one or more memories.

The one or more memories, based on being executed by the one or more processors, store instructions that configure the one or more processors to perform all steps of any one of methods performed by the UE.

One or more non-transitory computer readable mediums according to another embodiment of the present disclosure stores instructions.

The instructions executable by one or more processors configure the one or more processors to perform all steps of any one of methods performed by the UE.

A method performed by a base station in a wireless communication system according to another embodiment of the present disclosure comprises transmitting configuration information related to measurement, and receiving measurement information based on synchronization signal/physical broadcast channel (SS/PBCH) blocks (SSBs).

Each SSB includes i) a primary synchronization signal (PSS) and a secondary synchronization signal (SSS) related to a cell search; and ii) a PBCH.

The measurement information is determined based on the SSS.

The measurement information is determined based on a demodulation reference signal (DMRS) for the PBCH in addition to the SSS based on the configuration information.

The configuration information includes resource region information related to the PBCH and/or power boosting information related to the PBCH.

A base station operating in a wireless communication system according to another embodiment of the present disclosure comprises one or more transceivers, one or more processors, and one or more memories connected to the one or more processors and storing instructions.

The instructions, based on being executed by the one or more processors, configure the one or more processors to perform all steps of any one of methods performed by the base station.

[ADVANTAGEOUS EFFECTS]

According to embodiments of the present disclosure, measurement accuracy based on an SSB transmitted over a reduced channel bandwidth (e.g., 3 MHz) can be improved.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates an example of a frame structure in an NR system.

FIG. 2 illustrates an example of a resource grid in NR.

FIG. 3 illustrates physical channels and general signal transmission used in a 3GPP system.

FIG. 4 is a diagram illustrating an SSB structure to which a method proposed in the present disclosure is applicable.

FIG. 5 illustrates SSB transmission to which a method proposed in the present disclosure is applicable.

FIG. 6 illustrates a time-frequency structure of SSB according to an embodiment of the present disclosure.

FIG. 7 illustrates an example of a resource region in which SSB according to an embodiment of the present disclosure is transmitted.

FIG. 8 illustrates another example of a resource region in which SSB according to an embodiment of the present disclosure is transmitted.

FIG. 9 illustrates an example of a resource region related to additional transmission of PBCH according to an embodiment of the present disclosure.

FIG. 10 illustrates another example of a resource region related to additional transmission of PBCH according to an embodiment of the present disclosure.

FIG. 11 illustrates an example of a resource area related to repetition of an SSB according to an embodiment of the present disclosure.

FIG. 12 illustrates another example of the resource area related to repetition of the SSB according to an embodiment of the present disclosure.

FIG. 13 is a flow chart illustrating a method performed by a user equipment according to an embodiment of the present disclosure.

FIG. 14 is a flow chart illustrating a method performed by a base station according to another embodiment of the present disclosure.

FIG. 15 illustrates configuration of a first device and a second device according to an embodiment of the present disclosure.

[DETAILED DESCRIPTION]

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE-A or NR), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system."xxx" means a detailed standard document number. The LTE/NR may be collectively referred to as the 3GPP system.

Matters disclosed in a standard document opened before the disclosure may be referred to for a background art, terms, omissions, etc., used for describing the disclosure. For example, the following documents may be referred to.

3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

## New Rat (NR) Numerology and Frame Structure

In the NR system, multiple numerologies may be supported. The numerologies may be defined by subcarrier spacing and a cyclic prefix (CP) overhead. Spacing between the plurality of subcarriers may be derived by scaling basic subcarrier spacing into an integer N (or μ). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1. μ for a bandwidth part and the cyclic prefix are obtained from RRC parameters provided by the BS.

[Table 1]

| $\mu$ | $\Delta f = 2^\mu * 15$ [kHz] | Cyclic Prefix (CP) |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges FR1 and FR2. FR1 may denote sub 6 GHz range, and FR2 may denote above 6 GHz range and may mean millimeter wave (mmW).

Table 2 below shows an example of definition of the NR frequency band.

[Table 2]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ ms. In this case, there may be a set of UL frames and a set of DL frames.

Uplink frame number i for transmission from a user equipment (UE) shall start $T_{TA} = N_{TA} T_s$ before the start of a corresponding downlink frame at the corresponding UE.

For the numerology μ, slots are numbered in increasing order of $n_s^\mu \in \left\{0, ..., N_{subframe}^{slots, \mu} - 1\right\}$ within a subframe and are numbered in increasing order of $n_{s,f}^\mu \in \left\{0, ..., N_{frame}^{slots, \mu} - 1\right\}$ within a radio frame. One slot consists of consecutive OFDM symbols of $N_{symb}^\mu$, and $N_{symb}^\mu$ is determined depending on a numerology used and slot configuration.

The start of slots $n_s^\mu$ in a subframe is aligned in time with the start of OFDM symbols $n_s^\mu N_{symb}^\mu$ in the same subframe.

Not all UEs are able to transmit and receive at the same time, and this means that not all OFDM symbols in a downlink slot or an uplink slot are available to be used.

Table 3 represents the number $N_{symb}^{slot}$ of OFDM symbols per slot, the number $N_{slot}^{frame,\,\mu}$ of slots per radio frame, and the number $N_{slot}^{subframe,\,\mu}$ of slots per subframe in a normal CP. Table 4 represents the number of OFDM symbols per slot, the number of slots per radio frame, and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

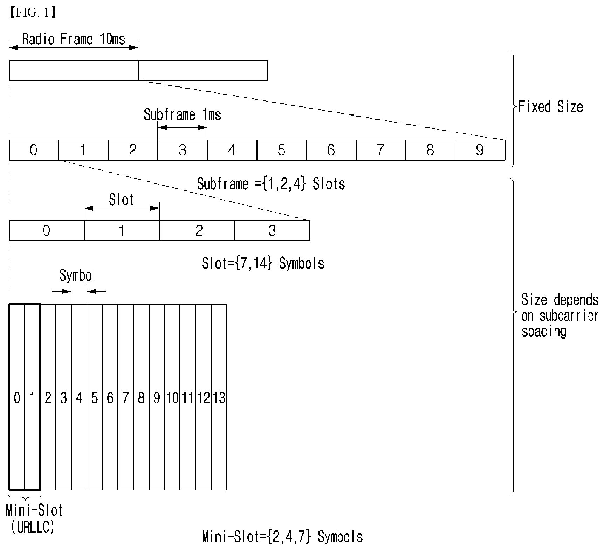

FIG. 1 illustrates an example of a frame structure in a NR system. FIG. 1 is merely for convenience of explanation and does not limit the scope of the disclosure.

In Table 4, in case of $\mu$ = 2, i.e., as an example in which a subcarrier spacing (SCS) is 60 kHz, one subframe (or frame) may include four slots with reference to Table 3, and one subframe = {1, 2, 4} slots shown in FIG. 1, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. may be considered.

The physical resources that may be considered in the NR system are described in detail below.

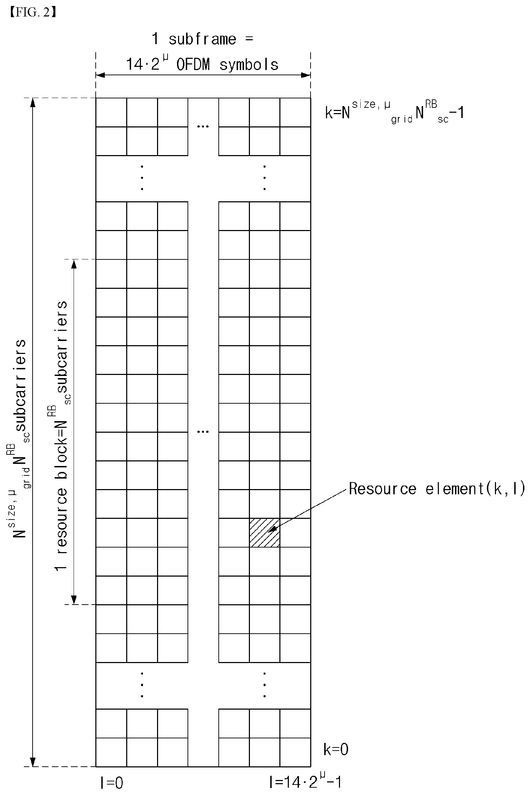

FIG. 2 illustrates an example of a resource grid supported in NR.

Referring to FIG. 2, for each subcarrier spacing configuration and carrier, a resource grid of N$^{size,\mu}$$_{grid}$*N$^{RB}$$_{sc}$ subcarriers and 14·2$^\mu$ OFDM symbols is defined, where N$^{size,\mu}$$_{grid}$ is indicated by RRC signaling from the BS. N$^{size,\mu}$$_{grid}$ may change between uplink and downlink as well as the subcarrier spacing configuration $\mu$.

Each element of the resource grid for the numerology $\mu$ and the antenna port p is called a resource element and is uniquely identified by an index pair $(k, \bar{l})$, where $k = 0,..., N_{RB}^\mu N_{sc}^{RB} - 1$ is an index on a frequency domain, and $\bar{l} = 0,...,2^\mu N_{symb}^{(\mu)} - 1$ refers to a location of a symbol in a subframe. The index pair $(k, l)$ is used to refer to a resource element in a slot, where $l = 0,...,N_{symb}^\mu - 1$.

The resource element $(k, \bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$. Further, a physical resource block is defined as $N_{sc}^{RB} = 12$ consecutive subcarriers in the frequency domain.

Considering that the UE may not be able to support a wide bandwidth to be supported in the NR system at one time, the UE may be configured to operate in a part of a frequency bandwidth of a cell (hereinafter, referred to as a bandwidth part (BWP)).

Resource blocks of the NR system include physical resource blocks defined in the bandwidth part and common resource blocks that are numbered upward from 0 in a frequency domain for the subcarrier spacing configuration $\mu$.

Point A serves as a common reference point of a resource block grid and may be obtained as follows.

- offsetToPointA for a PCell downlink represents a frequency offset between point A and the lowest subcarrier of the lowest resource block that overlaps with the SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents the frequency-location of point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{\text{CRB}}^{\mu}$ in the frequency domain and resource elements (k, 1) for the subcarrier spacing configuration $\mu$ may be given by the following Equation 1.

【Equation 1】

$$n_{\text{CRB}}^{\mu} = \left\lfloor \frac{k}{N_{\text{sc}}^{\text{RB}}} \right\rfloor$$

Here, $k$ may be defined relative to point A so that $k = 0$ corresponds to a subcarrier centered around point A. Physical resource blocks are defined within a bandwidth part (BWP) and are numbered from 0 to $N_{\text{BWP},i}^{\text{size}} - 1$, where $i$ is a number of the BWP. A relation between the physical resource block $n_{\text{PRB}}$ in BWP $i$ and the common resource block $n_{\text{CRB}}$ may be given by the following Equation 2.

【Equation 2】

$$n_{\text{CRB}} = n_{\text{PRB}} + N_{\text{BWP},i}^{\text{start}}$$

Here, $N_{\text{BWP},i}^{\text{start}}$ may be the common resource block where the BWP starts relative to the common resource block 0.

## Bandwidth Part (BWP)

In the NR system, up to 400 MHz can be supported per one carrier. If a UE operating in such a wideband carrier is always operated with a radio frequency (RF) module for all carriers turned on, battery consumption by the UE may increase. Alternatively, considering several use cases (e.g., eMBB, URLLC, mMTC, V2X, etc.) that are operated in one wideband carrier, different numerologies (e.g., subcarrier spacing) may be supported for each frequency band in the corresponding carrier. Alternatively, a capability for a maximum bandwidth may be different for each UE. Considering this, a base station (BS) may indicate the UE to operate only in a partial bandwidths rather than the entire bandwidth of a wideband carrier, and the partial bandwidth is defined as a bandwidth part (BWP). The BWP in the frequency doamin is a subset of continuous common resource blocks defined for numerology $\mu$i within a bandwidth part i on the carrier, and one numerology (e.g., subcarrier spacing, CP length, slot/mini-slot duration) may be configured.

The BS may configure one or more BWPs within one carrier configured for the UE. Alternatively, if UEs are concentrated on a specific BWP, some UEs may be shifted to different BWPs for load balancing. Alternatively, both BWPs may be configured in the same slot excluding some center spectrums of the entire bandwidth considering frequency domain inter-cell interference cancellation between contiguous cells, etc. That is, the BS can configure at least one DL/UL BWP to a UE associated with the wideband carrier, can activate at least one DL/UL BWP of configured DL/UL BWP(s) at a specific time (by L1 signaling which is the physical layer control signal, MAC control element (CE) which is the MAC layer control signal, or RRC signaling, etc.) and indicate to switch to other configured DL/UL BWP (by L1 signaling, MAC CE, or RRC signaling, etc.), or can the UE to switch to a given DL/UL BWP if a timer value is set and a timer is expired. The activated DL/UL BWP is defined as an active DL/UL BWP. The UE may not receive configuration for the DL/UL BWP when the UE is in an initial access procedure or RRC connection of the UE is not set up yet. In this situation, a DL/UL BWP assumed by the UE is defined as an initial active DL/UL BWP.

## Physical Channel and General Signal Transmission

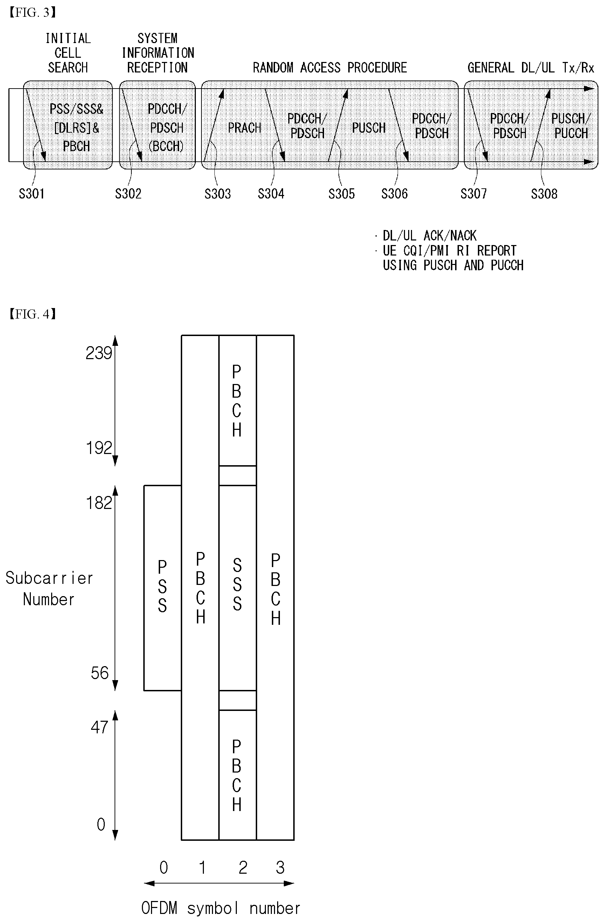

FIG. 3 illustrates physical channels and general signal transmission used in 3GPP systems. In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S301). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S302).

When there is no radio resource first accessing the eNB or for signal transmission, the UE may perform a Random Access Procedure (RACH) to the eNB (S303 to S306). To this end, the UE may transmit a specific sequence to a preamble through a Physical Random Access Channel (PRACH) (S303 and S305) and receive a response message (Random Access Response (RAR) message) for the preamble through the PDCCH and a corresponding PDSCH. In the case of a contention based RACH, a Contention Resolution Procedure may be additionally performed (S306).

The UE that performs the above procedure may then perform PDCCH/PDSCH reception (S307) and Physical Uplink Shared Channel (PUSCH)/Physical Uplink Control Channel (PUCCH) transmission (S308) as a general uplink/-downlink signal transmission procedure. In particular, the UE may receive Downlink Control Information (DCI) through the PDCCH.

The UE monitors a set of PDCCH candidates in monitoring occasions configured to one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH.

The PDCCH may be used to schedule DL transmissions on PDSCH and UL transmissions on PUSCH. The DCI on the PDCCH includes downlink assignment (i.e., DL grant) related to a downlink shared channel and including at least a modulation and coding format and resource allocation information, or an uplink grant (UL grant) related to an uplink shared channel and including a modulation and coding format and resource allocation information. The DCI has different formats depending on its purpose

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

## Synchronization Signal Block (SSB) Transmission and Related Operation

FIG. 4 is a diagram illustrating an SSB structure to which a method proposed in the present disclosure is applicable. The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 4, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers.

Polar coding and quadrature phase shift keying (QPSK) are applied to the PBCH. The PBCH consists of data REs and demodulation reference signal (DMRS) REs every OFDM symbol. Three DMRS REs are present per RB, and three data REs are present between the DMRS REs.

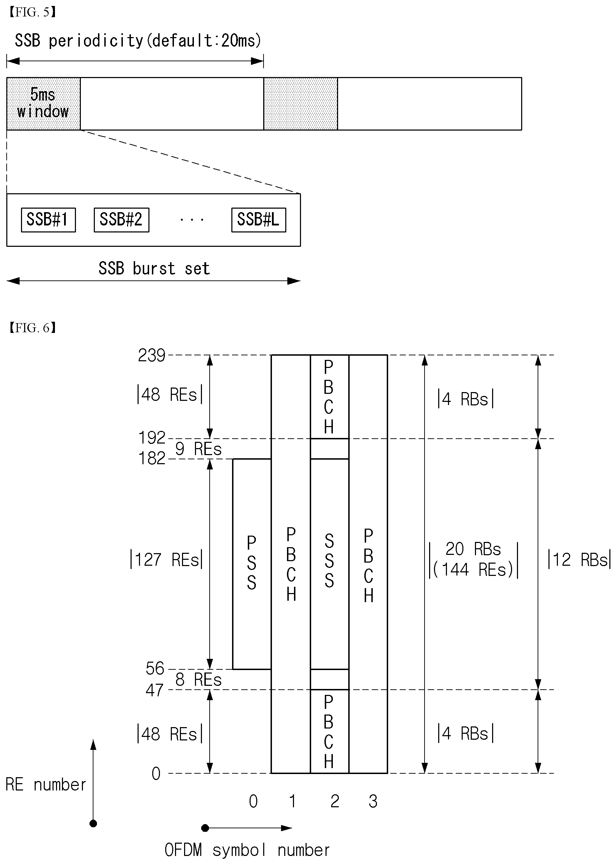

FIG. 5 illustrates SSB transmission to which a method proposed in the present disclosure is applicable.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SSB burst set. The maximum transmission number L of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time location of SSB candidates within the SSB burst set may be defined depending on SCS as follows. The time location of the SSB candidates is indexed (SSB index) from 0 to L-1 based on time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

The contents described above can be combined and applied to methods described below in the present disclosure, or can be supplemented to clarify technical features of the methods described in the present disclosure. Methods described below are merely distinguished for convenience of explanation. Thus, it is obvious that partial configuration of any method can be substituted or combined with partial configuration of another method.

Technical terms used in the present disclosure

UE: User Equipment
SSB: Synchronization Signal Block
MIB: Master Information Block
RMSI: Remaining Minimum System Information
FR1: Frequency Range 1. It refers to a frequency domain of 6 GHz or less (e.g., 450 MHz to 6,000 MHz).
FR2: Frequency Range 2. It refers to millimeter wave (mmWave) domain of 24 GHz or higher (e.g., 24,250 MHz to 52,600 MHz).
BW: Bandwidth
BWP: Bandwidth Part
RNTI: Radio Network Temporary Identifier
CRC: Cyclic Redundancy Check
SIB: System Information Block
SIB1: SIB1 for NR devices = RMSI (Remaining Minimum System Information). It broadcasts information, etc. necessary for cell access of an NR UE.
CORESET (COntrol REsource SET): Time/frequency resource in which an NR UE tries candidate PDCCH decoding
CORESET#0: CORESET for Type0-PDCCH CSS set for NR devices (configured in MIB)
Type0-PDCCH CSS set: a search space set in which an NR UE monitors a set of PDCCH candidates for a DCI format with CRC scrambled by a SI-RNTI
MO: PDCCH Monitoring Occasion for Type0-PDCCH CSS set
SIB1-R: (additional) SIB1 for reduced capability NR devices. It may be limited when it is generated with a separate TB from SIB1 and is transmitted on a separate PDSCH.
CORESET#0-R: CORESET#0 for reduced capability NR devices
Type0-PDCCH-R CSS set: a search space set in which a redcap UE monitors a set of PDCCH candidates for a DCI format with CRC scrambled by a SI-RNTI
MO-R: PDCCH Monitoring Occasion for Type0-PDCCH CSS set
Cell defining SSB (CD-SSB): SSB including RMSI scheduling information among NR SSBs

Non-cell defining SSB (non-CD-SSB): SSB that has been deployed on NR sync raster, but does not include RMSI scheduling information of a corresponding cell for measurement. But, the SSB may include information informing a location of cell defining SSB.

SCS: subcarrier spacing
SI-RNTI: System Information Radio-Network Temporary Identifier

Camp on: "Camp on" is the UE state in which the UE stays on a cell and is ready to initiate a potential dedicated service or to receive an ongoing broadcast service.

TB: Transport Block
RSA (Redcap standalone): Cell supporting only redcap device or service
SIB1(-R)-PDSCH: PDSCH transmitting SIB1(-R)
SIB1(-R)-DCI: DCI scheduling SIB1(-R)-PDSCH. DCI format 1_0 with CRC scrambled by SI-RNTI.
SIB1(-R)-PDCCH: PDCCH transmitting SIB1(-R)-DCI
FDRA: Frequency Domain Resource Allocation
TDRA: Time Domain Resource Allocation
RA: Random Access
MSGA: preamble and payload transmissions of the random access procedure for 2-step RA type.
MSGB: response to MSGA in the 2-step random access procedure. MSGB may consist of response(s) for contention resolution, fallback indication(s), and backoff indication.
RO-N: RACH Occasion (RO) for normal UE 4-step RACH and 2-step RACH (if configured)
RO-N1, RO-N2: If separate RO is configured for normal UE 2-step RACH, it is divided into RO-N1 (4-step) and RO-N2 (2-step).
RO-R: RACH Occasion (RO) separately configured from RO-N for redcap UE 4-step RACH and 2-step RACH(if configured)
RO-R1, RO-R2: If separate RO is configured for redcap UE 2-step RACH, it is divided into RO-R1 (4-step) and RO-R2 (2-step).
PG-R: MsgA-Preambles Group for redcap UEs
RAR: Random Access Response
RAR window: the time window to monitor RA response(s)
FH: Frequency Hopping
iBWP: initial BWP
iBWP-DL(-UL): initial DL(UL) BWP
iBWP-DL(-UL)-R: (separate) initial DL(UL) BWP for RedCap
CS: Cyclic shift
NB: Narrowband
TO: Traffic Offloading
mMTC; massive Machine Type Communications
eMBB: enhanced Mobile Broadband Communication
URLLC: Ultra-Reliable and Low Latency Communication
RedCap: Reduced Capability
eRedCap: enhanced RedCap
FDD: Frequency Division Duplex
HD-FDD: Half-Duplex-FDD
DRX: Discontinuous Reception
RRC: Radio Resource Control
RRM: Radio Resource Management
IWSN: Industrial Wireless Sensor Network
LPWA: Low Power Wide Area
RB: Resource Block
CCE: Control Channel Element
AL: Aggregation Level
PRG: Physical Resource-block Group
DFT-s-OFDM: DFT-spread OFDM
PBCH: Physical Broadcast Channel
A-PBCH: Additional PBCH
BD: blind detection
EPRE: Energy Per RE
SNR: Signal-to-Noise Ratio
TDM: Time Division Multiplexing
DMRS: DeModulation Reference Signal

TDD: Time Division Duplex

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

The 5G wireless communication system is characterized by effectively supporting use cases, such as mMTC, eMBB, and URLLC, compared to the previous generation wireless communication system (e.g., LTE, GSM). Due to these advantages, the 5G wireless communication system is expected to create new use cases and gradually replace the previous generation wireless communication system for various use cases.

In particular, features such as enhanced low latency, high reliability, massive connection, etc. of the 5G wireless communication system may be very useful for services/use cases (hereinafter, referred to as NB services/use cases) that have been supported in an existing narrowband (NB) dedicated spectrum, as follows.

[Examples of services/use cases to which the present disclosure is applicable]

    i) Railway mobile communication
    ii) Utility/Infrastructure network
    iii) Mobile communication for public safety

The NB services/use cases have been previously supported in a FDD dedicated spectrum with a bandwidth of about 3 MHz or more and less than 5 MHz in a frequency band less than 1 GHz using the previous generation wireless communication system.

A method of supporting the NB services/use cases in the 5G wireless communication system in the same environment (i.e., in a bandwidth of about 3 MHz or more and less than 5 MHz in a frequency band less than 1 GHz) is considered. To this end, it may be necessary to support a channel BW less than 5 MHz in the 5G NR standard. A minimum channel BW currently supported in the 5G NR standard is 5 MHz.

[Example of 5G NR frequency band for supporting NB service/use case (TS38.101-1)]

For example, the NB services/use cases can be supported in the following NR operating frequency band defined in NR standard TS38.101-1.

[Table 5]

| NR operating band | Uplink (UL) *operating band* BS receive/UE transmit $F_{UL\_low}$-$F_{UL\_high}$ | Downlink (DL) *operating band* BS transmit/UE receive $F_{DL\_low}$ - $F_{DL\_high}$ | Duplex Mode |
|---|---|---|---|
| n8 | 880 MHz - 915 MHz | 925 MHz - 960 MHz | FDD |
| n26 | 814 MHz - 849 MHz | 859 MHz - 894 MHz | FDD |
| n28 | 703 MHz - 748 MHz | 758 MHz - 803 MHz | FDD |
| n100 | 874.4 MHz - 880 MHz | 919.4 MHz - 925 MHz | FDD |

Table 5 shows UL/DL operating band defined per NR operating band in Frequency Range1 FR1.

[Example of definition of channel BW less than 5 MHz for supporting NB service/use case]

Table 6 shows an example of the maximum number of configurable RBs ($N_{RB}$) for each channel BW. According to Table 6, in order to support the NB services/use cases based on 5G NR, 3 MHz channel BW and the maximum number of configurable RBs ($N_{RB}$) (= 15) in the 3 MHz channel BW are defined, and in this case, a resource utilization ratio (or RU) is defined. The RU may be defined as below.

$$RU = (N_{RB} \text{ in MHz}) / (\text{channel BW in MHz})$$

[Table 6]

| Channel BW | 3 MHz | 5 MHz | 10 MHz | 15 MHz | 20 MHz | 25 MHz | 30 MHz | 40 MHz | 50 MHz |
|---|---|---|---|---|---|---|---|---|---|
| $N_{RB}$ | 15 | 25 | 52 | 79 | 106 | 133 | 160 | 216 | 270 |
| RU | 0.9 | 0.9 | 0.936 | 0.948 | 0.954 | 0.958 | 0.96 | 0.972 | 0.972 |

For example, for newly defined 3 MHz channel BW, one of $N_{RB}$ values shown in Table 7 below may be defined and used considering interference between contiguous channels and a resource utilization ratio. For example, multiple values of $N_{RB}$ values shown in Table 7 below may be supported in the NR standard and may be supported/used by base station configuration.

[Table 7]

| Channel BW | 3 MHz | | | |
|---|---|---|---|---|
| $N_{RB}$ | 12 | 13 | 14 | 15 |
| **RU** | **0.72** | **0.78** | **0.84** | **0.9** |

For example, the channel BW/$N_{RB}$ may be applied for both DL and UL as the same value. For example, the channel BW/$N_{RB}$ may be configured/supported separately/independently for DL and UL. A method according to the second example may be applied to the following situation. The method may be used to when intending to apply conditions where additional DFT precoding is applicable only to the UL when determining the $N_{RB}$ values, while supporting the maximum channel BW/$N_{RB}$ values in both DL and UL considering interference between contiguous channels and the resource utilization ratio.

If a channel BW less than 5 MHz is newly supported in the NR standard, there may be a problem with the reception of existing NR common/broadcast signal/channel. For example, if an SSB transmission bandwidth exceeds a minimum channel BW newly supported, the entire SSB may not be transmitted/received. This is described in detail with reference to FIG. 6.

FIG. 6 illustrates an example of a time-frequency structure of an SSB according to an embodiment of the present disclosure. Specifically, FIG. 6 illustrates the number of REs/the number of RBs in the time-frequency structure of FIG. 4 is added for each domain. Referring to FIG. 6, a frequency domain (bandwidth) for PSS and SSS consists of 127 resource elements (REs). A frequency domain (bandwidth) for PBCH consists of 20 resource blocks (RBs) (= 144 REs) or 4 RBs (= 48 REs).

As shown in Tables 6 and 7, $N_{RB}$ may be determined as one value of {12, 13, 14, 15}. For example, it may be assumed that $N_{RB}$ is 12 (12 PRBs = 2,16 MHz), and SSB has 15 kHz SCS (subcarrier spacing). The transmission/reception of the entire PSS/SSS bandwidth (127 REs = 1.905 MHz) is possible, but the entire transmission/reception may not be possible for PBCH (20 PRBs = 3.6 MHz).

In this case, the UE can normally receive the PSS/SSS (without reception coverage loss) by the UE operation defined in the existing NR standard. On the other hand, a reception coverage loss may be unavoidable for the PBCH. This may result in the overall reception coverage loss of the UE operating in a narrowband.

The present disclosure proposes methods of transmitting and receiving the PBCH in a narrowband considering the problems described above.

In the present disclosure, narrowband and NB can be interpreted/applied interchangeably.

In the present disclosure, broadcast signaling includes a signaling method, etc. using system information including SIB1, MIB, a PBCH payload generated in a PHY layer in addition to MIB, and a PBCH scrambling sequence and PBCH DMRS sequence initialization information.

In the present disclosure, a physical resource block (PRB) means a resource block (RB), and they can be interpreted/applied interchangeably.

PBCH transmission method

Method 1 (Puncturing)

A PBCH partial transmission method (puncturing method) is described in detail below.

After a base station generates a PBCH RE based on the NR standard, if a bandwidth occupied by the PBCH RE exceeds a channel BW, the base station may transmit only PBCH REs included in the channel BW. Here, the PBCH RE refers to a resource element (RE) to which the PBCH is mapped/transmitted. The base station may not transmit PBCH REs mapped outside the channel BW. That is, the base station can perform DL transmission after puncturing/skipping the PBCH REs mapped outside the channel BW.

In other words, assuming that the channel BW (3 MHz) is 12 RBs, the remaining 12 RBs after puncturing in the bandwidth (20 RBs) according to the above-described time-frequency structure may form an SSB.

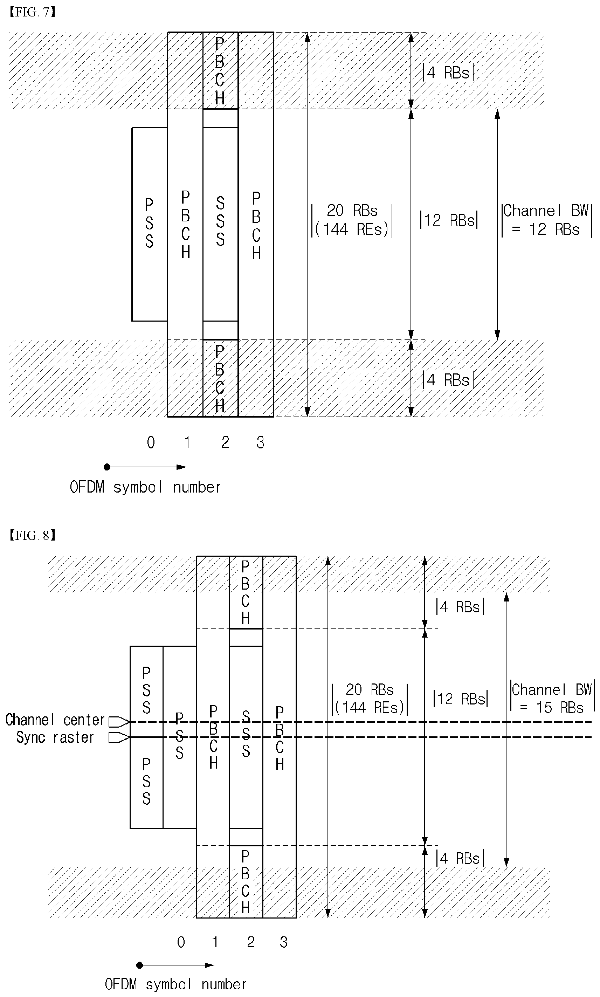

In this instance, a UE may expect PBCH RE transmission (or SSB transmission) only within the channel BW. That is, it may not expect the PBCH RE transmission (or SSB transmission) for REs that are not included in the channel BW. An example of the puncturing is described below with reference to FIG. 7.

FIG. 7 illustrates an example of a resource region in which SSB according to an embodiment of the present disclosure is transmitted. In FIG. 7, a hatched frequency domain is a domain that does not belong to the channel BW. The hatched frequency domain represents a frequency domain in which the PBCH transmission is punctured/skipped. However, the puncturing is not applied only to OFDM symbol numbers 1 to 3, but is applied to a frequency domain within OFDM symbol numbers 0 to 3 based on the time-frequency structure of the SSB, as illustrated in FIG. 7. Referring to FIGS. 6 and 7, the domain where the puncturing is applied within the OFDM symbol numbers 0 to 3 may be based on subcarrier numbers 0 to 47 and 192 to 239.

The frequency domain in which the PBCH is actually transmitted may be less than or equal to the channel BW, considering an influence on contiguous channels (when considering power boosting, etc.), a maximum frequency offset that can occur between a transmitter and a receiver, etc. For example, if the channel BW is defined as $N_{RB} = 15$, the PBCH transmission may be limited to 15 PRBs including a PSS/SSS transmission frequency band or 12 PRBs including the PSS/SSS transmission frequency band.

The puncturing operation is easily applied to the base station/UE operation. In other words, the puncturing operation has an advantage in that implementation complexity is reduced.

Method 2 (Asymmetric puncturing)

An asymmetric puncturing method is described in detail below.

A center frequency of NR SSB is located in the sync raster defined in NR standard TS38.101-1 (see Table 8 below).

【Table 8】

| Table 5.4.3.1-1: GSCN parameters for the global frequency raster (TS38.101-1) | | | |
|---|---|---|---|
| **Frequency range** | **SS Block frequency position SS$_{REF}$** | **GSCN** | **Range of GSCN** |
| 0 - 3000 MHz | N * 1200kHz + M * 50 kHz, N=1:2499, M ∈ {1,3,5} (Note 1) | 3N + (M-3)/2 | 2 - 7498 |
| 3000 - 24250 MHz | 3000 MHz + N * 1.44 MHz N = 0:14756 | 7499 + N | 7499 - 22255 |
| NOTE 1: The default value for operating bands with which only support SCS spaced channel raster(s) is M=3. | | | |

According to Table 8, sync rasters are arranged at intervals of 1.2 MHz in a frequency band less than or equal to 3 GHz. In this instance, there may be a case where the sync raster and a center frequency of the narrowband do not match. The base station may perform asymmetric puncturing to transmit the PBCH within the channel BW. Specifically, the asymmetric puncturing may be performed on REs to which the PBCH is transmitted/mapped.

In this instance, the UE may determine a resource region related to the PBCH based on at least one of i) sync raster information, ii) narrowband frequency information (including narrowband center frequency, bandwidth, etc.), and/or iii) channel BW information (additionally) defined in a narrowband. The resource region related to the PBCH may include a resource region (RE/RB/subcarrier number) in which the PBCH (or SSB) is transmitted and/or a resource region (RE/RB/subcarrier number) to which the puncturing is applied.

FIG. 8 illustrates another example of a resource region in which SSB according to an embodiment of the present disclosure is transmitted. More specifically, FIG. 8 illustrates an example of a resource region in which asymmetric puncturing is applied. Referring to FIG. 8, since a sync raster and a channel raster (a center frequency of a narrowband (channel bandwidth)) do not match, a frequency offset exists between the sync raster and the channel raster. Hence, the asymmetric puncturing is applied to transmit a PBCH (or SSB). In FIG. 7, two regions to which the puncturing is applied include i) a first region (subcarrier numbers 0 to 47) and ii) a second region (subcarrier numbers 192 to 239). Since the size of each region is the same as 48 REs (48 subcarriers = 4 RBs), the puncturing is symmetrically applied. On the other hand, in FIG. 8, two regions (hatched areas) to which the puncturing is applied may be based on different sizes (number of REs/RBs/subcarriers). That is, the puncturing is asymmetrically applied.

For example, a frequency resource region, in which the SSB (or PBCH) is transmitted, or a frequency resource region, in which the puncturing is applied, based on the above-described method may be pre-defined between the UE and the base station.

For example, the frequency resource region, in which the SSB (or PBCH) is transmitted, or the frequency resource region, in which the puncturing is applied, based on the above-described method may be configured by the base station. Information on the resource area configured by the base station may be indicated/configured/transmitted from the base station to the UE via broadcast signaling. According to the present embodiment, the resource region for the SSB (or PBCH) is not determined by the sync raster and the channel BW, etc. This is in consideration of the following technical matters. This is to enable the base station to adaptively transmit the PBCH (e.g., in a narrower frequency domain than the channel BW) based on a network configuration/environment.

The broadcast signaling is described in detail below. The base station may indicate the information (i.e., SSB resource region information and/or resource region information to which the puncturing is applied) to the UE based on a sequence of PBCH DM-RS (e.g., PBCH DM-RS sequence initialization value). This is because PBCH transmission RE information is information required in advance for PBCH decoding. The UE may acquire information on a resource region (RE/RB/subcarrier number) in which the SSB (or PBCH) is transmitted and/or a resource region (RE/RB/subcarrier number) to which the puncturing is applied by performing blind decoding (BD) on the PBCH DM-RS sequence or the PBCH DM-RS sequence initialization value. The UE may perform PBCH decoding based on the acquired information.

The above-described resource region may be defined based on the subcarrier number (e.g., subcarrier numbers 0 to 239) related to the time-frequency structure of the SSB. For example, if the size of the resource region to which the puncturing is applied is 4 RBs (48 REs/48 subcarriers), the resource region to which the puncturing is applied may be defined as a resource region based on subcarrier numbers 0 to 47 and 192 to 239 within OFDM symbol numbers 0 to 3.

For example, the time-frequency structure of the SSB based on at least one of the methods 1 and 2 may be based on Table 9 below.

【Table 9】

7.4.3.1                    Time-frequency structure of an SS/PBCH block

In the time domain, an SS/PBCH block consists of 4 OFDM symbols, numbered in increasing order from 0 to 3 within the SS/PBCH block, where PSS, SSS, and PBCH with associated DM-RS are mapped to symbols as given by Table 7.4.3.1-1.

In the frequency domain, an SS/PBCH block consists of 240 contiguous subcarriers with the subcarriers numbered in increasing order from 0 to 239 within the SS/PBCH block. The quantities $k$ and $l$ represent the frequency and time indices, respectively, within one SS/PBCH block. The UE may assume that the complex-valued symbols corresponding to resource elements denoted as 'Set to 0' in Table 7.4.3.1-1 are set to zero. The quantity $v$ in Table 7.4.3.1-1 is given by $v = N_{\mathrm{ID}}^{\mathrm{cell}} \bmod 4$. The quantity $k_{\mathrm{SSB}}$ is the subcarrier offset from subcarrier 0 in common resource block $N_{\mathrm{CRB}}^{\mathrm{SSB}}$ to the lowest-numbered subcarrier of the SS/PBCH block, or the SS/PBCH block after puncturing if applicable, where $N_{\mathrm{CRB}}^{\mathrm{SSB}}$ is obtained from the higher-layer parameter *offsetToPointA*.

- For operation with shared spectrum channel access in FR2-2 and for operation without shared spectrum channel access, the 4 least significant bits of $k_{\mathrm{SSB}}$ are given by the higher-layer parameter *ssb-SubcarrierOffset* and for FR1 the most significant bit of $k_{\mathrm{SSB}}$ is given by $\bar{a}_{\bar{A}+5}$ in the PBCH payload as defined in clause 7.1.1 of [4, TS 38.212].

- For operation with shared spectrum channel access in FR1, the 4 least significant bits of $\bar{k}_{\mathrm{SSB}}$ are given by the higher-layer parameter *ssb-SubcarrierOffset* and the most significant bit of $\bar{k}_{\mathrm{SSB}}$ is given by $\bar{a}_{\bar{A}+5}$ in the PBCH payload as defined in clause 7.1.1 of [4, TS 38.212]. If $\bar{k}_{\mathrm{SSB}} \geq 24$, $k_{\mathrm{SSB}} = \bar{k}_{\mathrm{SSB}}$ ; otherwise, $k_{\mathrm{SSB}} = 2\lfloor \bar{k}_{\mathrm{SSB}}/2 \rfloor$.

If *ssb-SubcarrierOffset* is not provided, $k_{\mathrm{SSB}}$ is derived from the frequency difference between the SS/PBCH block and Point A.

The UE may assume that the complex-valued symbols corresponding to resource elements that are part of a common resource block partially or fully overlapping with an SS/PBCH block, or an SS/PBCH block after puncturing if applicable, and not used for SS/PBCH transmission are set to zero in the OFDM symbols partially or fully overlapping with OFDM symbols where SS/PBCH is transmitted.

For an SS/PBCH block, the UE shall assume

- antenna port $p = 4000$ is used for transmission of PSS, SSS, PBCH and DM-RS for PBCH,
- the same cyclic prefix length and subcarrier spacing for the PSS, SSS, PBCH and DM-RS for PBCH,
- for SS/PBCH block type A, $\mu \in \{0,1\}$ and $k_{\mathrm{SSB}} \in \{0,1,2,...,23\}$ with the quantities $k_{\mathrm{SSB}}$, and $N_{\mathrm{CRB}}^{\mathrm{SSB}}$ expressed in terms of 15 kHz subcarrier spacing, and
- for SS/PBCH block type B in FR2-1, $\mu \in \{3,4\}$ and $k_{\mathrm{SSB}} \in \{0,1,2,...,11\}$ with the quantity $k_{\mathrm{SSB}}$ expressed in terms of the subcarrier spacing provided by the higher-layer parameter *subCarrierSpacingCommon* and $N_{\mathrm{CRB}}^{\mathrm{SSB}}$ expressed in terms of 60 kHz subcarrier spacing;
- for SS/PBCH block type B in FR2-2, $\mu \in \{3,5,6\}$ and $k_{\mathrm{SSB}} \in \{0,1,2,...,11\}$ with the

$k_{\mathrm{SSB}}$ expressed in terms of the subcarrier spacing provided by the higher-layer parameter *subCarrierSpacingCommon* and $N_{\mathrm{CRB}}^{\mathrm{SSB}}$ expressed in terms of 60 kHz subcarrier spacing;

- for SS/PBCH block type B in FR2-2, $\mu \in \{3,5,6\}$ and $k_{\mathrm{SSB}} \in \{0,1,2,...,11\}$ with the quantity $k_{\mathrm{SSB}}$

expressed in terms of the SS/PBCH block subcarrier spacing and $N_{CRB}^{SSB}$ expressed in terms of 60 kHz subcarrier spacing;

- the centre of subcarrier 0 of resource block $N_{CRB}^{SSB}$ coincides with the centre of subcarrier 0 of a common resource block with the subcarrier spacing

  - provided by the higher-layer parameter *subCarrierSpacingCommon* for operation without shared spectrum channel access in FR1 and FR2-1; and

  - same as the subcarrier spacing of the SS/PBCH block for operation without shared spectrum access in FR2-2 and for operation with shared spectrum channel access.

- This common resource block overlaps with subcarrier 0 of the lowest-numbered resource block of the SS/PBCH block, or the SS/PBCH block after puncturing if applicable.

The UE may assume that SS/PBCH blocks transmitted with the same block index on the same center frequency location are quasi co-located with respect to Doppler spread, Doppler shift, average gain, average delay, delay spread, and, when applicable, spatial Rx parameters. The UE shall not assume quasi co-location for any other SS/PBCH block transmissions other than what is specified in [5, TS 38.213].

For cell search on a carrier with a channel bandwidth of 3 MHz, the UE is not expected to receive subcarriers 0 to 47 and 192 to 239 in any of the 4 OFDM symbols of the SS/PBCH block, where the remaining 12 resource blocks form the SS/PBCH block after puncturing.

Table 7.4.3.1-1: Resources within an SS/PBCH block for PSS, SSS, PBCH, and DM-RS for PBCH.

| Channel or signal | OFDM symbol number $l$ relative to the start of an SS/PBCH block | Subcarrier number $k$ relative to the start of an SS/PBCH block |
| --- | --- | --- |
| PSS | 0 | 56, 57, …, 182 |
| SSS | 2 | 56, 57, …, 182 |
| Set to 0 | 0 | 0, 1, …, 55, 183, 184, …, 239 |

| | | 2 | 48, 49, …, 55, 183, 184, …, 191 |
| --- | --- | --- | --- |
| | | 1, 3 | 0, 1, …, 239 |
| | PBCH | 2 | 0, 1, …, 47, 192, 193, …, 239 |
| | DM-RS for PBCH | 1, 3 | $0+v, 4+v, 8+v, ..., 236+v$ |
| | | 2 | $0+v, 4+v, 8+v, ..., 44+v$ $192+v, 196+v, ..., 236+v$ |

Method 3 (PBCH additional transmission)

A method of additionally transmitting a PBCH is described in detail below.

A base station may additionally transmit a PBCH for the purpose of compensating or expanding a PBCH reception coverage loss. This method may be applied simultaneously and complementarily with the above-described PBCH partial transmission method (method 1, method 2). That is, the PBCH additional transmission method according to the present embodiment may be applied for the purpose of compensating the reception coverage loss caused by puncturing and transmitting a part of the PBCH.

The PBCH additional transmission may mean separately transmitting PBCH REs that are not actually transmitted due to the puncturing. For example, a resource region for PBCH additional transmission may include a resource region corresponding to a resource region in which the SSB (or PBCH) is not transmitted due to the puncturing. For example, the PBCH may be additionally transmitted in resource regions including the same number of REs as resource regions for PBCH that is not actually transmitted due to the puncturing in the PBCH partial transmission method (method 1).

The base station may transmit additional PBCH REs along with all or part of the existing PBCH within the channel BW. The UE may perform PBCH decoding by receiving/combining the additionally transmitted PBCH REs along with all or part of the existing PBCH within the channel BW.

In the present disclosure, the existing PBCH may mean i) a PBCH that an existing NR UE expects/receives and/or ii) a PBCH that is generated based on an existing method and forms an SSB time/frequency structure of FIG. 6 through RE mapping. The additional PBCH may mean a PBCH that is transmitted by being mapped to REs that the existing NR UE does not expect to receive. For example, the additional PBCH may be transmitted by additionally mapping all or part of a PBCH codeword generated from the existing PBCH channel encoding to separate RE(s). For example, the additional PBCH may be transmitted based on copying/repetition in units of RE, RB, and/or OFDM symbol for all or part of the existing PBCH REs. That is, all or part of the existing PBCH REs may be repeated in units of RE, RB, and/or OFDM symbol in a resource region for the additional PBCH.

The additional PBCH generated based on the above-described method may be transmitted based on i) the same beam as the existing PBCH and/or ii) a different beam from the existing PBCH. If the same beam as the existing PBCH is used, the UE may expect to receive the existing PBCH and the additional PBCH using the same spatial filter.

Hereinafter, the existing PBCH is referred to as PBCH, and the additional PBCH is referred to as A-PBCH (additional PBCH). The term 'A-PBCH' described above is only intended to easily distinguish a resource region in which the PBCH is additionally transmitted from a resource region in which the existing PBCH is transmitted, and is not intended to limit the scope, to which embodiments according to the present disclosure are applied, to the above term.

The base station may transmit an additional PBCH (A-PBCH) in a different time domain from the existing PBCH in the form of time division multiplexing (TDM). If the A-PBCH is transmitted based on a TDM scheme, the base station may transmit the A-PBCH within the channel BW or within a frequency band of the existing PBCH transmission.

For example, the base station may transmit the A-PBCH subsequently to a last OFDM symbol of the existing PBCH transmission.

For example, the base station may transmit the A-PBCH with a gap of N (e.g., N=1) OFDM symbols from the last OFDM symbol of the existing PBCH transmission. The gap may be defined considering sync performance, etc., for utilizing the A-PBCH for SSB transmission pattern, other signals/channels, time/frequency synchronization, etc. N may be defined for a numerology (CP/SCS) transmitting the PBCH, especially for each SCS. In addition, a value of N may be i) a fixed value, or ii) a value applied differently for each slot (with a specific pattern).

Method 3-1 (Location of OFDM symbol for additional PBCH (A-PBCH))

A location of an OFDM symbol in which an additional PBCH (A-PBCH) is transmitted is described in detail below.

The location of the OFDM symbol in which the A-PBCH is transmitted may be indicated or predefined among remaining OFDM symbols excluding existing SSB transmission symbols. For example, as in the example of FIG. 7, if a coverage loss of about 3 dB is expected, the A-PBCH may be transmitted in two OFDM symbols to compensate for the coverage loss. The A-PBCH may be transmitted in remaining OFDM symbols excluding an SSB transmission symbol of the same slot as the existing PBCH or a contiguous slot before/after the existing PBCH (where an SSB is transmitted).

According to the existing method, a location of the SSB transmission symbol is specified as shown in Table 10 below.

[Table 10]

| |
|---|
| For a half frame with SS/PBCH blocks, the first symbol indexes for candidate SS/PBCH blocks are determined according to the SCS of SS/PBCH blocks as follows, where index 0 corresponds to the first symbol of the first slot in a half-frame.<br><br>- Case A - 15 kHz SCS: the first symbols of the candidate SS/PBCH blocks have indexes of $\{2,8\} + 14 \cdot n$.<br>- For operation without shared spectrum channel access:<br>     - For carrier frequencies smaller than or equal to 3 GHz, $n = 0,1$.<br>     - For carrier frequencies within FR1 larger than 3 GHz, $n = 0,1,2,3$.<br>- For operation with shared spectrum channel access, as described in [15, TS 37.213], $n = 0,1, 2, 3, 4$.<br>- Case B - 30 kHz SCS: the first symbols of the candidate SS/PBCH blocks have indexes $\{4,8,16,20\} + 28 \cdot n$. For carrier frequencies smaller than or equal to 3 GHz, n = 0. For carrier frequencies within FR1 larger than 3 GHz, n = 0,1.<br>- Case C - 30 kHz SCS: the first symbols of the candidate SS/PBCH blocks have indexes $\{2,8\} + 14 \cdot n$.<br>- For operation without shared spectrum channel access |

(continued)

> - For paired spectrum operation
> - For carrier frequencies smaller than or equal to 3 GHz, *n = 0,1.* For carrier frequencies within
>     FR1 larger than 3 GHz, *n = 0,1,2,3.*
>         - For unpaired spectrum operation
> - For carrier frequencies smaller than 1.88 GHz, n = 0,1. For carrier frequencies within FR1 equal to or larger than 1.88 GHz, n = 0,1,2,3.
> - For operation with shared spectrum channel access, n = 0, 1, 2, 3, 4, 5, 6, 7, 8, 9.
> - Case D - 120 kHz SCS: the first symbols of the candidate SS/PBCH blocks have indexes *{4,8,16,20}* + 28 · n. For carrier frequencies within FR2, *n = 0, 1, 2, 3, 5, 6, 7, 8, 10, 11, 12, 13, 15, 16, 17, 18.*
> - Case E - 240 kHz SCS: the first symbols of the candidate SS/PBCH blocks have indexes *{8,12,16,20,32,36,40,44}* + 56 · n. For carrier frequencies within FR2-1, *n = 0, 1, 2, 3, 5, 6, 7, 8.*
> - Case F - 480 kHz SCS: the first symbols of the candidate SS/PBCH blocks have indexes *{2, 9}* + 14 · n. For carrier frequencies within FR2-2, n = *0,1,2,3,4,5,6,7,8,9,10,11,12,13,14,15,16,17,18,19,20,21,22,23,24,25,26,27,28,29,30,31.*
> - Case G - 960 kHz SCS: the first symbols of the candidate SS/PBCH blocks have indexes *{2,9}* + 14 · n. For carrier frequencies within FR2-2, n = *0,1,2,3,4,5,6,7,8,9,10,11,12,13,14,15,16,17,18,19,20,21,22,23,24,25,26,27,28,29,30,31.*
> ...

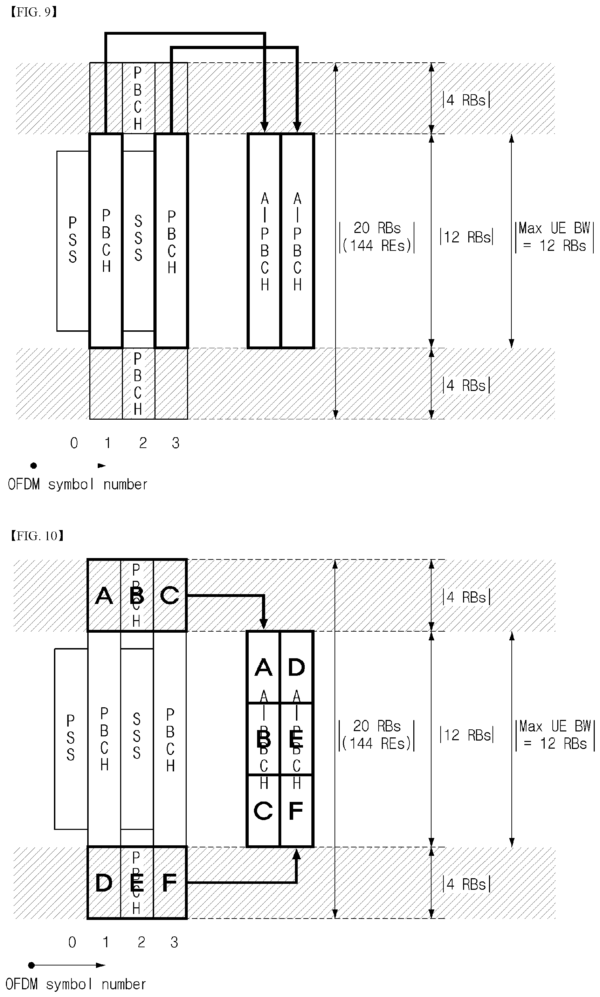

Referring to FIG. 10, Case A/B/C are applicable for FR1.

For example, in the FR1 Case A and Case C, the UE may expect an additional PBCH (A-PBCH) transmission during two OFDM symbols per PBCH or per SSB within a half frame in which an SSB is present. In this instance, a first OFDM symbol index of the A-PBCH transmission may be as follows.

$$\{2,8\} + \mathbf{4} + 14 \cdot n$$

(the notation and the definition of n follow Table 10)

That is, the first OFDM symbol index of the A-PBCH transmission may be defined by adding a specific offset value (e.g., +4) to a first OFDM symbol index of the SSB. Here, the specific offset value +4 is an example of an offset value for transmitting the A-PBCH subsequently to a last OFDM symbol of the existing PBCH transmission. As an additional example of the specific offset value, the specific offset value may be defined/set as -2 for the purpose of transmitting the A-PBCH at a location of two contiguous OFDM symbols preceding the existing PBCH transmission. Alternatively, the specific offset value may be defined/set as -8, -4, +6, +10, etc. for the purpose of back-to-back transmitting two A-PBCHs at a slot boundary.

For the Case B, a location of an A-PBCH transmission OFDM symbol may be defined in a similar manner to the Case A. For example, in the FR1 Case B, the UE may expect A-PBCH transmission during two OFDM symbols per PBCH or per SSB within a half frame in which the SSB is present. In this instance, the first OFDM symbol index of the A-PBCH transmission may be as follows.

$$\{4,8,16,20\} + \mathbf{4} + 28 \cdot n$$

(the notation and the definition of n follow Table 10)

As an additional example of the specific offset value, the specific offset value may be defined/set as -2 for the purpose of transmitting the A-PBCH at a location of two contiguous OFDM symbols preceding the existing PBCH transmission. Alternatively, the specific offset value may be defined/set as -6, -4, +6, +8, etc. for the purpose of back-to-back transmitting two A-PBCHs at a slot boundary. Alternatively, the specific offset value may be defined/set as -18, -16, -10, -8, +10, +12, +18, +20, etc. for the purpose of back-to-back transmitting four A-PBCHs at a slot boundary.

For all the Cases, the specific offset values defined for the above purpose may be defined/applied equally or differently when determining a location of the A-PBCH depending on or per location of the SSB or the PBCH within the slot. Further, the specific offset values may be defined/applied equally or differently in order to support/allow the A-PBCH to be transmitted at different locations per slot.

Method 3-2 (Indication of transmission for additional PBCH (A-PBCH) and its transmission location)

A method of indicating transmission for an additional PBCH (A-PBCH) and a transmission location of the A-PBCH to a UE is described in detail below.

Information on whether to transmit the A-PBCH and information on a time/frequency location at which the A-PBCH is transmitted may be defined/configured/indicated as in the following examples.

For example, the information on whether to transmit the A-PBCH and the information on the time/frequency location at which the A-PBCH is transmitted may be pre-defined. Hence, the base station/UE may equally assume all the pre-defined information without separate configuration.

For example, in order to secure flexibility in network operation, whether to transmit the A-PBCH and the time/frequency location at which the A-PBCH is transmitted may be determined by the base station considering a network environment. The base station may inform the UE of information determined via broadcast signaling or dedicated/UE-specific RRC signaling.

The information on the time/frequency location at which the A-PBCH is transmitted may include information on a relative location from an existing PBCH transmission time/frequency location. For example, the information on the time/frequency location at which the A-PBCH is transmitted may include offset value(s) for the existing PBCH transmission time/frequency location.

The information on whether to transmit the A-PBCH and the information on the time/frequency location at which the A-PBCH is transmitted may be transmitted in the same manner for legacy UE (type) that does not support/expect A-PBCH reception. The legacy UE (type) may perform a rate-matching operation and a collision handling operation using the above information.

If the information on whether to transmit the A-PBCH is not available, the UE may perform the BD on the time/frequency location at which the A-PBCH can be transmitted and may grasp whether to transmit the A-PBCH.

The case where the information on whether to transmit the A-PBCH is not available includes a case where the information is not configured/indicated or where the PBCH reception shall be performed before receiving the information. The UE acquiring the information on whether to transmit the A-PBCH and the information on the time/frequency location at which the A-PBCH is transmitted may receive the A-PBCH based on the corresponding information.

If the base station supports the A-PBCH transmission, the base station may indicate whether each cell supports the A-PBCH transmission, via broadcast signaling.

Method 3-3 (Additional PBCH (A-PBCH) related collision handling)

A method for collision handling related to transmission of A-PBCH is described in detail below. According to the existing method, a UE may assume that OFDM symbols for SSB transmission are not indicated in UL by TDD configuration.

For example, the same assumption as SSB described above may be applied to the A-PBCH transmission described in the present disclosure. Specifically, the UE may assume that OFDM symbol(s) for the A-PBCH transmission are not indicated in UL by the TDD configuration.

For example, the A-PBCH transmission may be considered as auxiliary information that can be used for a specific UE (type), and thus some or all of the A-PBCH transmission OFDM symbols may be indicated in UL. In this case, the UE may not expect the entire A-PBCH transmission or may not expect A-PBCH transmission only for the OFDM symbol(s) indicated in UL.

In the existing TDD or half duplex-frequency division duplex (HD-FDD) UE operation, when SSB reception and UL transmission overlap, it is specified that the SSB reception is prioritized and the (overlapping or entire) UL transmission is dropped.

For example, the same rule as the existing SSB reception may be applied to A-PBCH reception. Specifically, if the A-PBCH reception overlaps with the UL transmission, the UE may prioritize an A-PBCH reception operation. That is, if the A-PBCH transmission OFDM symbol(s) overlap with the UL transmission, the UE may be specified to drop the entire UL transmission or UL transmission symbol(s) overlapping with the A-PBCH transmission OFDM symbol.

For example, since the A-PBCH reception depends on UE properties, the UE may select from among the A-PBCH reception and the UL transmission for the overlapping OFDM symbol(s) based on the UE implementation method. In other words, the UE may drop the A-PBCH reception or the UL transmission for the overlapping OFDM symbol(s).

In addition, if the UE needs to monitor/receive the PDCCH from another beam direction at a reception time of the A-PBCH by CORESET#0/Type0-PDCCH MO configuration corresponding to the SSB (i.e., if the UE needs to monitor/receive PDCCH using another spatial filter), the UE may not expect the A-PBCH transmission for the entire A-PBCH transmission or for the overlapping OFDM symbol(s). Alternatively, the UE may select from among the A-PBCH reception and the PDCCH monitoring/reception for the overlapping OFDM symbol(s) by the UE implementation. In other words, the UE may perform one of the A-PBCH reception or the PDCCH monitoring/reception and drop the other.

The operation according to the above-described embodiment may not be limited to the case where the UE shall monitor/receive the PDCCH using another spatial filter by CORESET#0/Type0-PDCCH MO configuration. That is, the operation according to the above-described embodiment may also be applied when receiving another DL channel/signal using another spatial filter. For example, rules for the same collision handling as the case of the PDCCH reception by the CORESET#0/Type0-PDCCH MO configuration may be applied even when the SSB is received using a different spatial filter from the A-PBCH.

Method 3-3 (RE mapping of additional PBCH (A-PBCH))

An A-PBCH transmitted at A-PBCH transmission time/frequency location described in the present disclosure may be generated or mapped to RE(s) in the following method based on the existing PBCH.

[Mapping Method #1]

RE mapping of A-PBCH may be based on copying/repetition performed at the same frequency/RB/RE location as the existing PBCH.

According to the mapping method #1, all or some of the PBCH transmission OFDM symbols are copied/repeated while maintaining an existing PBCH symbol frequency structure. That is, it is a method of copying at the same frequency/RB/RE location. This is described in detail below with reference to FIG. 9.

FIG. 9 illustrates an example of a resource region related to additional transmission of PBCH according to an embodiment of the present disclosure.

Specifically, FIG. 9 illustrates an example of an A-PBCH consisting of two OFDM symbols by copying PBCH transmission OFDM symbol number {1,3}.

According to the mapping method #1, a frequency domain may be copied/repeated as follows.

For example, the entire frequency domain of PBCH transmission OFDM symbol number {1,3} may be copied/repeated. For example, as illustrated in FIG. 9, only the frequency domain corresponding to the maximum UE BW or the maximum transmission BW of the UE may be copied/repeated.

The mapping method #1 may be advantageous in terms of UE synchronization performance compared to other mapping methods. When the mapping method #1 is applied, the UE may use a phase change per subcarrier/RE between the PBCH OFDM symbol(s) and the A-PBCH OFDM symbol(s) for UE frequency/time synchronization. The order of A-PBCH transmission OFDM symbols may be changed to optimize the synchronization performance. That is, instead of configuring the A-PBCH with the PBCH transmission OFDM symbol number {1,3} in the example above, the A-PBCH may be configured with PBCH transmission OFDM symbol number {3,1} by changing the copying/repetition order.

[Mapping Method #2]

RE mapping of A-PBCH may be based on copying/repetition performed at a different frequency/RB/RE location from a frequency/RB/RE location of the existing PBCH.

According to the mapping method #2, all or part of a time/frequency domain of the existing PBCH that the UE has not received is mapped to a frequency band in which the UE receives the existing PBCH. That is, a PBCH region mapped to both edges or one edge of a bandwidth of the existing SSB is mapped to the frequency band in which the UE receives the existing PBCH. This is described in detail below with reference to FIG. 10.

FIG. 10 illustrates another example of a resource region related to additional transmission of PBCH according to an embodiment of the present disclosure. Specifically, FIG. 10 illustrates an example of an A-PBCH consisting of two OFDM symbols.

In the existing PBCH transmission OFDM symbol number {1,2,3}, the PBCH mapped to an upper edge (an upper hatched area) of an SSB bandwidth is mapped to a first OFDM symbol for A-PBCH transmission. The PBCH mapped to a lower edge (a lower hatched area) is mapped to a second OFDM symbol for the A-PBCH transmission.

In FIG. 10, {A, B, C} respectively represent three resource regions (three PBCH blocks) in which the UE cannot receive the PBCH due to UE bandwidth limitation in the PBCH transmission OFDM symbol number {1, 2, 3}.

The three PBCH blocks {A, B, C} may be mapped in the first OFDM symbol constituting the A-PBCH in ascending or descending order of frequency. In the same manner, PBCH blocks {D, E, F} may be mapped in the second OFDM symbol constituting the A-PBCH in ascending or descending order of frequency.

The above-described mapping order is an example according to the mapping method #2.

The frequency/time order in which the respective PBCH blocks {A, B, C, D, E, F} are mapped in the A-PBCH transmission OFDM symbol may be determined based on combinations of i) frequency ascending order (e.g., lowest subcarrier number → highest subcarrier number), ii) frequency descending order (e.g., highest subcarrier number → lowest subcarrier number), iii) time ascending order (e.g., lowest OFDM symbol number → highest OFDM symbol number), and/or iv) time descending order (e.g., highest OFDM symbol number → lowest OFDM symbol number).

For example, the respective PBCH blocks {A, B, C, D, E, F} may be mapped based on the time ascending order and the frequency ascending order. Specifically, A and B may be mapped to the lowest frequency locations (locations of C and F of the A-PBCH in FIG. 10) in two OFDM symbols, the next C and D may be mapped to the next frequency locations (locations of B and E of the A-PBCH in FIG. 10), and the remaining E and F may be mapped to the next frequency locations (locations of A and D of the A-PBCH in FIG. 10).

For example, the respective PBCH blocks {A, B, C, D, E, F} may be mapped in the first OFDM symbol in the frequency descending order and may be mapped in the second OFDM symbol in the frequency ascending order. According to the present embodiment, A, B, and C in the first OFDM symbol are mapped in the frequency descending order in the same manner as FIG. 10. D, E, and F in the second OFDM symbol are mapped in the frequency ascending order (in the form of change of the locations of D and F in the second OFDM symbol for the A-PBCH based on FIG. 10).

According to the present embodiment, the RE mapping order within each PBCH block may be the same or may be changed based on the PBCH block mapping order. That is, the mapping structure may be the same before and after copying/repetition, or the RE mapping order within each PBCH block may be changed based on the mapping order of the PBCH blocks.

The mapping method #2 may have an advantage in terms of overall PBCH decoding performance including the A-PBCH compared to other mapping methods. When the mapping method #2 is applied, the UE may receive a part of a codeword that has not been received in the existing PBCH through the A-PBCH (via the same or different frequency domain). As a result, improvement in the overall PBCH decoding performance can be expected.

The method in which the PBCH blocks {A, B, C} are mapped to the A-PBCH transmission OFDM symbols by the mapping method #2 is not limited to the method of copying at a level of the PBCH blocks as illustrated in FIG. 10. For example, the PBCH blocks may be re-mapped at a level of the REs. For example, it may be assumed that the number of available REs in the A-PBCH transmission OFDM symbol(s) is insufficient or remains. In this case, some REs may be copied/repeated. That is, some REs may be re-mapped (to the remaining resource region/another resource region).

[Mapping Method #3] Cross mapping (cross-application of different mapping methods)

If A-PBCH is repeatedly transmitted, a different mapping method (e.g., the mapping method #1 or the mapping method #2) may be applied every N (e.g., N=1) A-PBCH transmission. By transmitting the A-PBCH while alternately applying the mapping methods with different advantages, a kind of benefit due to methodological diversity can be expected.

That is, the UE can expect a synchronization performance gain in a specific A-PBCH transmission (via the mapping method #1), and can expect a decoding performance gain in another transmission (via the mapping method #2).

The N value may be a preset value that does not require separate signaling. Alternatively, the N value may be selected by the base station and may be indicated to the UE via broadcast signaling or dedicated/UE-specific RRC signaling.

Whether to perform an operation based on the mapping method #3 (whether to apply the cross mapping) may be supported by the base station configuration. The base station may select the RE mapping method when transmitting the A-PBCH. The base station may configure/indicate the selected RE mapping method (e.g., one of the mapping methods #1 to #3) to the UE via broadcast signaling or dedicated/UE-specific RRC signaling.

Method 3-4 [PBCH additional transmission by adjusting SSB transmission periodicity]

A method for PBCH additional transmission based on adjustment of SSB transmission periodicity is described below.

Specifically, the base station may configure the SSB transmission periodicity to be less than an existing network setting value for the purpose of preserving/extending a PBCH reception range. As a PBCH reception occasion of the UE increases, a gain through repetition reception can be expected.

This method has an advantage of being easily supported on a network configuration in a dedicated spectrum, such as a narrowband dedicated frequency band, i.e., when there is no need to consider an impact on the existing NR UE.

For example, in order to support the UE that requires preservation/extension of the PBCH reception range in a state in which the existing SSB transmission periodicity is 20 ms, the base station may transmit the SSB at 10 ms periodicity and may set parameter ssb-PeriodicityServingCell in SIB1 to 10 ms.

According to the existing UE operation, before acquiring actual SSB transmission periodicity information through SIB1 reception, for example, during a cell search process, the SSB transmission periodicity is assumed to be 20 ms. This is an assumption that SSB is transmitted at least once every 20 ms. In a dedicated spectrum, such as a serving cell or a narrowband dedicated frequency band, that supports a PBCH additional transmission method by adjusting the SSB transmission periodicity, the UE that requires preservation/extension of the PBCH reception range may perform a PBCH reception operation assuming the SSB transmission periodicity less than 20 ms (e.g., 5 ms, 10 ms, etc.).

For the above operation, the SSB transmission periodicity that the UE assumes during the cell search process may be pre-defined for each frequency band (i.e., for each frequency band or for each band number within FR1). The base station may determine the SSB transmission periodicity for cell search.

Or, for the purpose of preventing excessive power consumption of the UE, before acquiring the actual SSB transmission periodicity information through SIB1 reception, the UE may operate assuming the SSB transmission periodicity of 20 ms as before (e.g., assuming the SSB transmission periodicity of 20 ms during the cell search process). The UE may receive PBCH based on the SSB transmission periodicity configured in SIB1 from after the SIB1 reception.

Method 4 (Same beam SSB repeated transmission)

Hereinafter, a method for repeatedly transmitting an SSB of the same beam will be specifically described.

The base station may repeatedly transmit the SSB with the same beam (using the same SSB index) for a purpose of preserving/extending a PBCH reception range. As an example, according to an existing NR standard, a maximum number of SSB indices that may be supported per cell in a frequency band of FR1 3 GHz or less, $L_{max}$, is 4.

Instead of transmitting SSBs in different beam directions using up to four different transmit SSB indices, the base station may operate as follows.

As an example, the base station may use two transmission SSB indices. The base station may perform repeated transmission twice for each transmission SSB index. As an example, the base station may use one transmission SSB index. The base station may perform four repeated transmissions for one SSB index. Through the operation, an SSB or PBCH reception range may be preserved/extended (for a specific beam direction).

As an example, when repeatedly transmitting the same beam SSB, different transmission SSB indices may be used between the repeatedly transmitted SSBs. Based on different transmission SSB indices, it may be indicated that the same beam is applied but different PBCH RE mapping methods are applied. For the above-described operation, a meaning of the transmission SSB index may be additionally defined in advance between the base station and the UE.

Method 4-1 (Candidate SSB transmission location)

Hereinafter, an addition method of the candidate SSB transmission location and the resulting base station/UE operation will be specifically described.

According to an embodiment, the same beam SSB repeat transmissions may be performed based on a previously defined candidate SSB transmission location. When an SSB transmission period is 20 ms and the candidate SSB location index in a half frame starting every 20 ms period is {0, 1, 2, 3}, a transmission SSB index corresponding to each candidate SSB location index can be as [1] or [2] below.

Hereinafter, 'repeated transmission of SSB based on the transmission SSB index' may be interpreted/applied as replaced with 'repeated transmission of the SSB based on the same beam or the same spatial direction'.

[1] When transmitting each of transmission SSB indices 0 and 1 twice, {0, 0, 1, 1}
[2] When transmitting transmission SSB index 0 four times, {0, 0, 0, 0}

According to an embodiment, repeated transmissions may be performed using a candidate SSB transmission location that is additionally defined in addition to the previously defined candidate SSB transmission location within the half frame. When the SSB transmission period is 20 ms and the candidate SSB location index in the half frame starting every 20 ms period is {0, 1, 2, 3}, the candidate SSB location index may be applied within the same half frame (e.g., candidate SSB location indices {4, 5, 6, 7}).

Transmission SSB indices corresponding to the candidate SSB location indices 0 to 7 within the half frame may be based on one of Examples 1) to 4) below.

Example 1) When transmitting each of transmission SSB indices 0, 1, 2, and 3 twice, {0, 1, 2, 3, 0, 1, 2, 3}
Example 2) When transmitting each of transmission SSB indices 0 and 1 four times, {0, 1, 0, 1, 0, 1, 0, 1}
Example 3) When transmitting each of transmission SSB indices 0, 1, 2, and 3 twice, {0, 0, 1, 1, 2, 2, 3, 3}
Example 4) When transmitting each of transmission SSB indices 0 and 1 four times, {0, 0, 0, 0, 1, 1, 1, 1}

According to examples 1) and 2), repetition is performed after all transmission SSB indices are transmitted first. According to examples 3) and 4), after transmission and repeated transmission based on one transmission SSB index are performed, the SSB index is changed.

Examples 1) and 2) have an advantage of enabling SSB beam sweeping in a short time in a general case other than a cell edge UE. Examples 3) and 4) have an advantage of obtaining a combining gain from adjacent transmission SSB indices even in a fast time-varying channel.

According to an embodiment, the candidate SSB transmission location defined/added within the half frame may also be identically added to another half frame (within the 20 ms period). SSB repeated transmission may be performed based on the candidate SSB transmission location added within the same half frame and the candidate SSB transmission location added within another half frame.

As an example, when the SSB transmission period is 20 ms and the candidate SSB location index in the half frame starting every 20 ms period is {0, 1, 2, 3}, a candidate SSB transmission location may be added within a second or third half frame within the same 20 ms period. Assuming the added candidate SSB location indices are {4, 5, 6, 7}, the transmission SSB indices corresponding to candidate SSB location indices 0 to 7 may be determined based on Examples 1) to 4) above.

Method 4-2 (PBCH RE mapping method 1)

A method for simply repeatedly transmitting the SSB for PBCH RE mapping when repeatedly transmitting the same beam SSB may be considered.

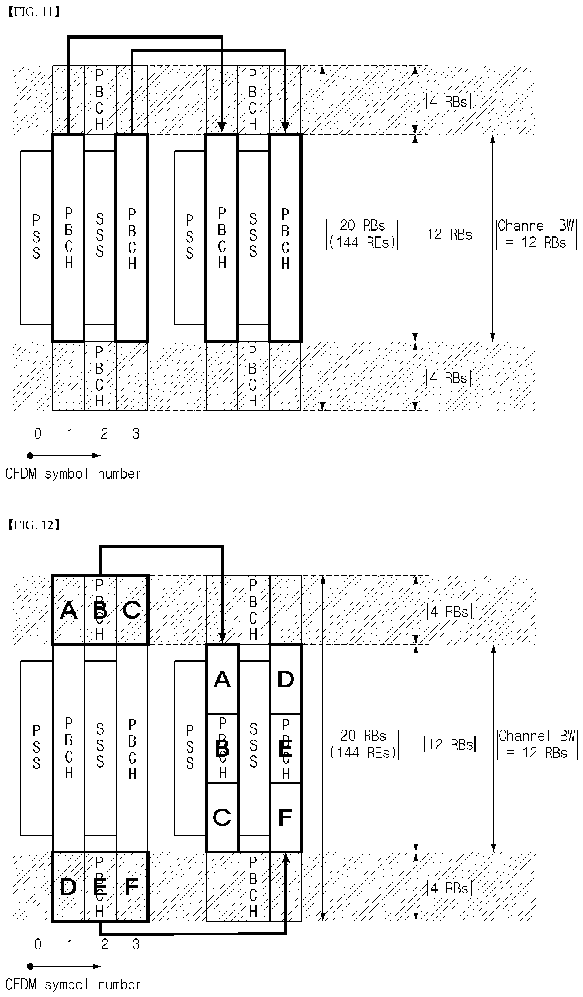

RE mapping for repeatedly transmitting the same beam SSB may be performed based on simple repeated transmission of the SSB. That is, the simple repeated transmission may mean additional transmission to another candidate SSB transmission location while maintaining the SSB time/frequency structure of FIG. 6. Hereinafter, the RE mapping method will be specifically described with reference to FIG. 11.

FIG. 11 illustrates an example of a resource region related to repetition of an SSB according to an embodiment of the present disclosure. Specifically, referring to FIG. 11, when the same beam SSB is repeatedly transmitted, the RE mapping based on the time-frequency structure of FIG. 6 is repeated identically. For two SSBs that are repeatedly transmitted with the same beam, PBCH REs actually transmitted within the channel BW are exactly the same. That is, a PBCH based on OFDM symbol number 1(3) in a first time-frequency structure is identical to a PBCH in a second symbol (a fourth symbol) in a second time-frequency structure (a repeated time-frequency structure).

The UE may expect a repetition gain effect by repeatedly receiving the same PBCH REs.

According to an embodiment, RE mapping for SSB repeated transmission may be performed by applying a frequency offset to the SSB while maintaining the SSB time/frequency structure. In other words, in the case of FIG. 11, frequency domain locations of the repeated time/frequency structure are the same as subcarrier numbers 0 to 239. According to the embodiment, the frequency domain location of the second time/frequency structure may be determined by applying an offset to a frequency domain location of the first time/frequency structure. As a specific example, assuming the offset to be 10, the frequency domain location of the second time/frequency structure may be subcarrier numbers 10 to 249. According to the embodiment, the following effect is derived. When an entire SSB transmission bandwidth may not be transmitted/received within the channel BW, the combining gain during reception may be maximized by making the SSB transmission REs transmitted/received within the channel BW different when repeatedly transmitting the same beam SSB.

A-PBCH RE mapping method #1 (e.g., FIG. 9) described above may be applied to PBCH RE mapping in the case of repeated transmission of the same beam SSB as exemplified in FIG. 11.

Method 4-3 (PBCH RE mapping method 2)

A method for changing the mapping scheme for each repeated transmission for the PBCH RE mapping during the repeated transmission of the same beam SSB may be considered.

A method for changing the PBCH RE mapping scheme (while keeping the PSS/SSS RE mapping method the same) for each repeated transmission of the same beam SSB may be applied.

In this method, a frequency diversity gain may be expected by transmitting PBCH REs through different frequency domains each time the PBCH REs are repeatedly transmitted. In addition, when transmitting the SSB through a narrowband, if the entire PSS/SSS transmission frequency band may be transmitted/received but the entire PBCH transmission frequency band may not be transmitted/received, there is an effect of being capable of maximizing the combining gain when the UE receives the PBCH by making the RE of the PBCH repeatedly received within the channel BW different.

Hereinafter, the RE mapping method will be specifically described with reference to FIG. 12.

FIG. 12 illustrates another example of the resource region related to repetition of the SSB according to an embodiment of the present disclosure. Specifically, FIG. 12 illustrates an example in which the PBCH RE mapping method is changed when the same beam SSB is repeatedly transmitted.

Referring to FIG. 12, when repeatedly transmitting the SSB with the same beam, PBCH REs that are not included in the channel BW in the first SSB transmission are preferentially mapped to REs within the channel BW upon the repeated SSB transmission. PBCH REs not included in the channel BW may mean untransmitted PBCH REs or punctured PBCH REs.

The UE may expect the combining gain effect by receiving different PBCH RE portions during repeated reception.

A-PBCH RE mapping method #2 (e.g., FIG. 10) described above may be applied to PBCH RE mapping when repeatedly transmitting the same beam SSB as exemplified in FIG. 12.

Method 4-4 (Configuration for supporting same beam SSB repeated transmission method)

Hereinafter, a method for indicating, to the UE, the configuration (parameters) for supporting the same beam SSB repeated transmission method will be described.

The parameters for supporting the same beam SSB repetition transmission method may be predefined between the UE and the base station.

The parameters may be determined by the base station considering a network environment in order to ensure flexibility in network operation. The base station may inform the UE of the determined parameters through broadcast signaling or dedicated/UE-specific RRC signaling.

The parameters may include parameters related to at least one of an SSB repeated transmission method, a PBCH RE mapping method during repeated transmission, and/or information related to an additional candidate SSB transmission location.

The information for the parameters may also be transmitted in the same scheme for a conventional UE (type) that does not support/expect A-PBCH reception. The conventional UE (type) may perform a rate-matching and collision handling operation by using the information.

When information for whether the same beam SSB being repeatedly transmitted is not available, the UE may perform BD for the time/frequency locations where the SSB is enabled to be transmitted to determine whether the SSB is repeatedly transmitted.

The case where the information for whether the same beam SSB being repeatedly transmitted is not available includes a case where the information is not configured/indicated or where the SSB (or PBCH) reception must be performed prior to receiving the information. A UE that obtains the information for whether the SSB being repeatedly transmitted and the time/frequency location information may receive the SSB based on the information.

When the base station supports the same beam SSB repeated transmission method, it may indicate, for each cell, whether the cell supports the same beam SSB repeated transmission method through the broadcast signaling.

Method 5 (UE measurement supporting method)

Hereinafter, a method for supporting UE measurement for a reduced bandwidth will be specifically described.

The UE may perform measurements for intra-frequency/inter-frequency cells in order to support idle/inactive/-connected mode mobility. During this process, the UE may measure/calculate Synchronization Signal-Reference Signal Received Power (SS-RSRP)/Synchronization Signal-Reference Signal Received Quality (SS-RSRQ)/Synchronization Signal-SIgnal to Noise and interference Ratio ((SS-SINR)) using the SSB. Further, the UE may measure/calculate the CSI-RSRP/CSI-RSRQ/CSI-SINR, etc. using the CSI-RS.

According to the existing scheme, in the process of measuring/calculating the SS-RSRP/SS-RSRQ/SS-SINR, the UE may use the PBCH DMRS in addition to the SSS (see Table 11 below).

[Table 11]

| |
|---|
| ...<br>For SS-RSRP determination demodulation reference signals for physical broadcast channel (PBCH) and, if indicated by higher layers, CSI reference signals in addition to secondary synchronization signals may be used.<br>...<br>For SS-SINR determination demodulation reference signals for physical broadcast channel (PBCH) in addition to secondary synchronization signals may be used. |

In order to support a UE measurement operation in a narrowband (i.e., in order to support an operation using the PBCH DMRS for measurements such as SS-RSRP/SS-RSRQ/SS-SINR targeting narrowband), the following operation may be performed.

The base station may inform the UE of information for the PBCH transmission method for the narrowband cell through broadcast signaling (e.g., SIB) or dedicated/UE-specific RRC signaling.

At this time, the measurements may include intra-frequency measurement and/or inter-frequency measurement. The information regarding the PBCH transmission method may be all or some of the configuration parameters broadcast-signaled in order to support the PBCH transmission methods (methods 1 to 4) proposed by the present disclosure. The information for the PBCH transmission method may include PBCH puncturing location information, additional transmission location information when the PBCH is additionally transmitted, SSB transmission period information, whether the SSB is repeatedly transmitted and repetition location information, (additional) PBCH RE mapping information, etc.

The information regarding the PBCH transmission method may further include PBCH (DMRS) power boosting information when PBCH (DMRS) power boosting is applied.

The PBCH (DMRS) power boosting information may be a relative offset value of PBCH (DMRS) Energy Per Resource Element (EPRE) compared to SSS EPRE. As an example, when the PBCH (DMRS) EPRE is transmitted twice as much as the SSB EPRE, the offset value may be 3 dB. When the UE measures/calculates the SS-RSRP/SS-RSRQ/SS-SINR, etc., using the PBCH DMRS in addition to the SSS, the UE may apply the PBCH (DMRS) EPRE offset value compared to the SSS EPRE.

As an example, for a cell supporting or applying the PBCH transmission method proposed by the present disclosure, the intra-frequency/inter-frequency measurements may be configured to not be allowed ("not allowed").

As an example, for the cell supporting or applying the PBCH transmission method proposed by the present disclosure, the intra-frequency/inter-frequency measurements may be configured to be allowed, and using the PBCH DMRS may be configured to be not allowed when measuring/calculating the SS-RSRP/SS-RSRQ/SS-SINR, etc. In other words, when measuring/calculating the SS-RSRP/SS-RSRQ/SS-SINR, etc., information for whether the PBCH DMRS being used may be configured/indicated to the UE by the base station.

Configuration information based on Method 5 may be transmitted based on broadcast signaling (e.g., SIB) or dedicated/UE-specific RRC signaling.

As an example, the configuration information based on Method 5 may be included in a system information block. That is, the base station may transmit the SIB including the configuration information based on Method 5 to the UE. The SIB may include SIB3 and/or SIB4.

Table 12 below illustrates information/parameters included in SIB3 and SIB4.

[Table 12]

| |
|---|
| - *SIB3*<br>*SIB3* contains <u>neighbouring cell related information relevant only for intra-frequency cell re-selection</u>. The IE includes cells with specific re-selection parameters as well as exclude-listed cells.<br>- *SIB4*<br>*SIB4* contains <u>information relevant for inter-frequency cell re-selection (i.e. information about other NR frequencies and inter-frequency neighbouring cells relevant for cell re-selection), which can also be used for NR idle/inactive measurements</u>. The IE includes cell re-selection parameters common for a frequency as well as cell specific re-selection parameters. |

In terms of implementation, the operations (e.g., operations based on at least one of Method 1, Method 2, Method 3, Method 4, and Method 5) of the base station/UE according to the above-described embodiments may be processed by devices (e.g., processors 110 and 210 in FIG. 15) in FIG. 15 to be described below.

Further, the operations (e.g., operations based on at least one of Method 1, Method 2, Method 3, Method 4, and Method 5) of the base station/UE according to the above-described embodiment may be stored in memories (e.g., 140 and 240 in FIG. 15) in the form of an instruction/program (e.g., instruction or executable code) for driving at least one processor (e.g., 110 and 210 in FIG. 15).

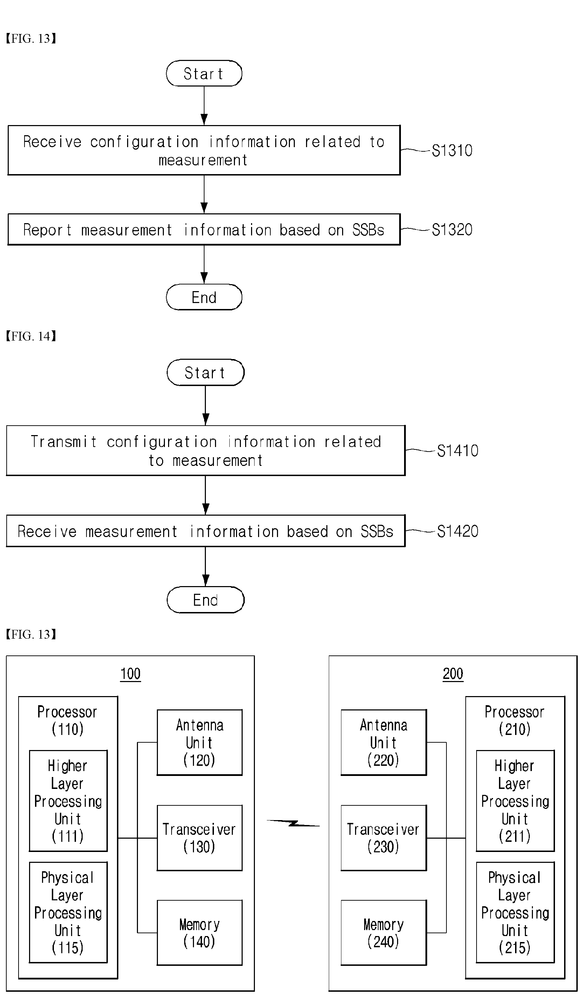

Hereinafter, the above-described embodiments will be described in detail with reference to FIGS. 13 and 14 in terms of the operations of the UE/base station. Methods to be described below are just distinguished for convenience of description and it is needless to say that some components of any one method may be substituted with some components of another method or may be applied in combination with each other.

FIG. 13 is a flowchart for describing a method performed by a user equipment (UE) according to an embodiment of the present disclosure.

Referring to FIG. 13, a method performed by a UE in a wireless communication system according to an embodiment of the present disclosure includes a step (S1310) of receiving configuration information related to measurement and a step (S1320) of reporting measurement information based on SSBs.

In S1310, the UE receives, from the base station, configuration information related to measurement.

According to an embodiment, the configuration information may be received based on an RRC message or a system information block (SIB). As an example, the configuration information may be based on SIB3 or SIB4.

According to an embodiment, the measurement may include intra-frequency measurement and/or inter-frequency measurement.

In S1320, the UE reports, to the base station, measurement information based on synchronization signal/physical broadcast channel (SS/PBCH) blocks (SSBs).

Each SSB may include i) a primary synchronization signal (PSS) and a secondary synchronization signal (SSS) related to a cell search; and ii) a PBCH.

The measurement information may be determined based on the SSS (e.g., SSSs based on the SSBs). As an example, the measurement information may include at least one of i) SS-reference signal received power (SS-RSRP) and/or ii) SS-signal to noise and interference ratio (SS-SINR).

According to an embodiment, the measurement information may be determined based on a demodulation reference signal (DMRS) for the PBCH in addition to the SSS based on the configuration information. As an example, the SSS may include the SSSs based on the SSBs. The DMRS for the PBCH may include DMRSs for PBCHs based on the SSBs.

In order to support various use cases, a channel bandwidth supported by the UE may be reduced compared to a narrowest channel bandwidth defined previously (e.g., 5 MHz). In such a case, the bandwidth according to the previously defined time-frequency structure goes beyond the reduced channel bandwidth (e.g., 3 MHz). For example, when a subcarrier spacing (SCS) is 15 KHz, a size of a frequency band based on the 240 subcarriers is 3.6 MHz, which exceeds the reduced channel bandwidth (3 MHz). In other words, when a narrower channel bandwidth is supported than the existing supported channel bandwidth, the existing resource region defined for the SSB will go beyond a newly supported channel bandwidth. In order to address the problem, the SSB may be transmitted in a resource region based on at least one of Methods 1 to 4.

As described above, when the resource region where the SSB is transmitted is different from the resource region based on the previously defined time-frequency structure due to the reduced channel bandwidth (e.g., 3 MHz), the accuracy of measurement information obtained in the corresponding channel bandwidth (e.g., 3 MHz) may be degraded. Further, a cell reselection operation of the UE may also be negatively affected as the measurement accuracy in the corresponding channel bandwidth is degraded. That is, when the UE reselects a cell based on measurement information, the UE may select a cell with poor channel quality or select a different cell instead of the cell with the best channel quality.

Hereinafter, embodiments for solving the above-described problems will be specifically described.

According to an embodiment, the configuration information may include resource region information related to the PBCH and/or power boosting information related to the PBCH. The embodiment may be based on Method 5.

The resource region information related to the PBCH may include information related to at least one of i) a resource region related to puncturing based on a channel bandwidth, ii) a resource region in which the PBCH is additionally transmitted, and/or iii) a resource region related to repetition of the SSB based on a same beam.

Based on the channel bandwidth, each SSB may be received within a resource region based on 240 contiguous subcarriers based on subcarrier numbers 0 to 239 within four OFDM symbols based on orthogonal frequency division multiplexing (OFDM) symbol numbers 0 to 3.

According to an embodiment, based on the channel bandwidth being 3 MHz, each SSB may be received in a resource region within the four OFDM symbols in which some of the 240 contiguous subcarriers are punctured. The resource region may include 12 resource blocks (RBs). The resource region may be based on Method 1 or Method 2.

One RB is defined as 12 consecutive subcarriers in a frequency domain (e.g., $N_{\text{sc}}^{\text{RB}} = 12$ in FIG. 2).

The 12 RBs may be remaining RBs, excluding 8 RBs based on the subcarriers related to the puncturing, among the 20 RBs based on the 240 contiguous subcarriers. That is, the number of RBs within the channel bandwidth of 3 MHz may be 12 (Table 7).

The resource region related to the puncturing may be related to i) the subcarriers related to the puncturing and/or ii) the remaining RBs. That is, the configuration information may include information for i) and/or ii) above.

The subcarriers related to the puncturing may include first subcarriers and second subcarriers.

Based on a number of first subcarriers and a number of second subcarriers being the same as each other: the first subcarriers may be based on subcarrier numbers 0 to 47, and the second subcarriers may be based on subcarrier numbers 192 to 239. This will be described with reference to FIG. 7.

Hatched regions 4RBs and 4RBs in FIG. 7 may be the first/second subcarriers related to the puncturing. FIG. 7 illustrates an example in which the puncturing is applied symmetrically.

As an example, the number of the first subcarriers and the number of the second subcarriers being different: the first subcarriers may include subcarriers having a subcarrier number smaller than a subcarrier number based on a center frequency position of the channel bandwidth, and the second subcarriers may include subcarriers having a subcarrier number larger than the subcarrier number based on the center frequency position. This will be described with reference to FIG. 8.

Hatched regions in FIG. 8 may be the first/second subcarriers related to the puncturing. FIG. 8 illustrates an example in which the puncturing is applied asymmetrically. FIG. 8 illustrates a case where the channel bandwidth (3 MHz) includes 15 RBs, and the remaining RBs except 15 RBs out of 20 RBs based on 240 consecutive subcarriers are punctured. However, the number of RBs (15) illustrated in FIG. 8 is an example, and the number of RBs may be changed and applied to another value (e.g., 12) based on Table 7. In FIG. 8, the channel center corresponds to the center frequency position of the channel bandwidth.

Referring to FIGS. 6 and 8, the first subcarriers may be based on subcarrier numbers smaller than the subcarrier number based on THE center frequency location of the channel bandwidth (e.g., subcarrier number < channel center). The second subcarriers may be based on subcarrier numbers larger than the subcarrier number based on the center frequency location of the channel bandwidth (e.g., subcarrier number > channel center).

According to an embodiment, based on a synchronization raster related to a frequency position of the SSB being different from the center frequency position: the number of the first subcarriers and the number of the second subcarriers may be determined to be different. That is, it may be determined that asymmetric puncturing is applied. The synchronization raster may be related to one of the 240 consecutive subcarriers. As an example, the synchronization raster may be mapped to a resource element (RE)(s) based on subcarrier number 120.

According to an embodiment, based on the channel bandwidth being equal to or larger than 5 MHz, each SSB may be received in a resource region based on the 240 consecutive subcarriers. That is, the PBCH may be received as follows through the existing defined channel bandwidth (channel bandwidth ≥ 5 MHz) (see FIG. 4 and FIG. 6).

The PBCH may be received in a resource region based on OFDM symbols 1 to 3.

In OFDM symbols based on OFDM symbol numbers 1 and 3, the PBCH may be received in a resource region based on subcarrier numbers 0 to 239.

In an OFDM symbol based on OFDM symbol number 2, the PBCH may be received in a resource region based on subcarrier numbers 0 to 47 and subcarrier numbers 192 to 239.

According to an embodiment, the PSS may be received in a resource region based on subcarrier numbers 56 to 182 in an OFDM symbol based on OFDM symbol number 0. The SSS may be received in a resource region based on subcarrier numbers 56 to 182 in the OFDM symbol based on OFDM symbol number 2.

Since the PSS and the SSS have high importance, even if the channel bandwidth is reduced to 3 MHz, puncturing may not be applied to the resource region for the PSS and the SSS.

That is, based on the channel bandwidth being 3 MHz: the puncturing may be applied to some of the remaining subcarriers other than the subcarriers based on subcarrier numbers 56 to 182 among the 240 consecutive subcarriers. As a specific example, the above puncturing may be applied to subcarriers based on subcarrier numbers 0 to 47 and 192 to 239 among subcarriers based on subcarrier numbers 0 to 55 and 183 to 239.

According to an embodiment, the channel bandwidth may be related to the cell search.

According to an embodiment, the channel bandwidth is one of the UE channel bandwidths (MHz) defined for each operating band. The UE channel bandwidths (MHz) may include at least one of 3, 5, 10, 15, 20, 25, 30, 35, 40, 45, 50, 60, 70, 80, 90, and/or 100. The operating band may mean an NR operating band (e.g., Table 5).

As an example, when the NR operating band is n8 and the SCS is 15 KHz, the UE channel bandwidths (MHz) may include 5, 10, 15, 20, and 35.

As an example, when the NR operating band is n8 and the SCS is 30 KHz, the UE channel bandwidths (MHz) may include 10, 15, 20, and 35.

According to an embodiment, the SSBs are based on SSBs transmitted within a half-frame.

According to an embodiment, information related to the resource region in which the PBCH is additionally transmitted may include a symbol offset. The embodiment may be based on Method 3.

As an example, the resource region in which the PBCH is additionally transmitted may be determined based on a first symbol index related to each SSB and the symbol offset. The symbol offset may be based on a specific offset value (e.g., 4) defined in Method 3-1.

According to an embodiment, power boosting information related to the PBCH may include a power offset based on the channel bandwidth.

Based on the channel bandwidth being 3 MHz, an energy per resource element (EPRE) related to the PBCH may be determined based on i) an EPRE related to the SSS and ii) the power offset. The power offset may be based on the offset value (e.g., 3) in Method 5.

According to an embodiment, a resource region related to repetition of the SSB may be determined based on first symbol indexes for candidate SSBs within the half frame. A number of SSBs transmitted based on the same beam among the candidate SSBs may be larger than 2. The embodiment may be based on Method 4.

The operations based on S1310 and S1320 described above may be implemented by a device in FIG. 15. For example, the UE 200 may control one or more transceivers 230 and/or one or more memories 240 to perform the operations based on S1310 to S1320.

Hereinafter, the embodiments described above will be specifically described in terms of the operation of the base station.

S1410 and S1420 described below correspond to S1310 and S1320 described in FIG. 13. By considering the correspondence relationship, redundant descriptions are omitted. That is, a specific description of the base station operation described below may be replaced with the description/embodiment of FIG. 13 corresponding to the corresponding operation.

FIG. 14 is a flowchart for describing a method performed by a base station according to another embodiment of the present disclosure.

Referring to FIG. 14, a method performed by a base station in a wireless communication system according to another embodiment of the present disclosure includes a step (S1410) of transmitting configuration information related to measurement and a step (S1420) of receiving measurement information based on SSBs.

In S1410, the base station transmits, to the UE, configuration information related to measurement.

In S1420, the base station receives, from the UE, measurement information based on synchronization signal/physical broadcast channel (SS/PBCH) blocks (SSBs).

The operations based on S1410 and S1420 described above may be implemented by the device in FIG. 15. For example, the base station 100 may control one or more transceivers 130 and/or one or more memories 140 to perform the operations based on S1410 to S1420.

A device to which an embodiment of the present disclosure is applicable (a device implementing the method/operation according to an embodiment of the present disclosure) is described below with reference to FIG. 15.

FIG. 15 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1.  A method performed by a user equipment (UE) in a wireless communication system, the method comprising:

    receiving configuration information related to measurement; and
    reporting measurement information based on synchronization signal/physical broadcast channel (SS/PBCH) blocks (SSBs),
    wherein each SSB includes i) a primary synchronization signal (PSS) and a secondary synchronization signal (SSS) related to a cell search; and ii) a PBCH,
    wherein the measurement information is determined based on the SSS,
    wherein the measurement information is determined based on a demodulation reference signal (DMRS) for the PBCH in addition to the SSS based on the configuration information, and
    wherein the configuration information includes resource region information related to the PBCH and/or power boosting information related to the PBCH.

2.  The method of claim 1, wherein the resource region information related to the PBCH includes information related to at least one of i) a resource region related to puncturing based on a channel bandwidth, ii) a resource region in which the PBCH is additionally transmitted, and/or iii) a resource region related to repetition of the SSB based on a same beam.

3.  The method of claim 2, wherein based on the channel bandwidth, each SSB is received within a resource region based on 240 contiguous subcarriers based on subcarrier numbers 0 to 239 within four OFDM symbols based on orthogonal frequency division multiplexing (OFDM) symbol numbers 0 to 3.

4.  The method of claim 3, wherein based on the channel bandwidth being 3 MHz: each SSB is received in a resource region within the four OFDM symbols in which some of the 240 contiguous subcarriers are punctured, and wherein the resource region includes 12 resource blocks (RBs).

5.  The method of claim 4, wherein one RB is defined as 12 consecutive subcarriers in a frequency domain, and wherein the 12 RBs are remaining RBs, excluding 8 RBs based on the subcarriers related to the puncturing, among the 20 RBs based on the 240 contiguous subcarriers.

6.  The method of claim 5, wherein the resource region related to the puncturing is related to i) the subcarriers related to the puncturing and/or ii) the remaining RBs.

7.  The method of claim 6, wherein the subcarriers related to the puncturing include first subcarriers and second subcarriers.

8.  The method of claim 7, wherein based on a number of first subcarriers and a number of second subcarriers being the same as each other:

    the first subcarriers are based on subcarrier numbers 0 to 47, and
    the second subcarriers are based on subcarrier numbers 192 to 239.

9.  The method of claim 7, wherein based on the number of first subcarriers and the number of second subcarriers being different from each other:

    the first subcarriers include subcarriers with a subcarrier number smaller than a subcarrier number based on a center frequency position of the channel bandwidth, and

the second subcarriers include subcarriers with a subcarrier number larger than the subcarrier number based on the center frequency position of the channel bandwidth.

10. The method of claim 3, wherein based on the channel bandwidth being equal to or larger than 5 MHz, each SSB is received in a resource region based on the 240 contiguous subcarriers.

11. The method of claim 2, wherein the channel bandwidth is related to the cell search.

12. The method of claim 2, wherein the channel bandwidth is one of the UE channel bandwidths (MHz) defined for each operating band, and
    wherein the UE channel bandwidths (MHz) include at least one of 3, 5, 10, 15, 20, 25, 30, 35, 40, 45, 50, 60, 70, 80, 90, and/or 100.

13. The method of claim 1, wherein the SSBs are based on SSBs transmitted within a half-frame.

14. The method of claim 1, wherein the measurement information includes at least one of i) SS-reference signal received power (SS-RSRP) and/or ii) SS-signal to noise and interference ratio (SS-SINR).

15. The method of claim 1, wherein the configuration information is received based on an RRC message or a system information block (SIB).

16. The method of claim 1, wherein the measurement includes intra-frequency measurement and/or inter-frequency measurement.

17. The method of claim 2, wherein information related to the resource region in which the PBCH is additionally transmitted includes a symbol offset, and
    wherein the resource region in which the PBCH is additionally transmitted is determined based on a first symbol index related to each SSB and the symbol offset.

18. The method of claim 1, wherein power boosting information related to the PBCH includes a power offset based on the channel bandwidth, and
    wherein based on the channel bandwidth being 3 MHz, an energy per resource element (EPRE) related to the PBCH is determined based on i) an EPRE related to the SSS and ii) the power offset.

19. The method of claim 2, wherein a resource region related to repetition of the SSB is determined based on first symbol indexes for candidate SSBs within the half-frame, and
    wherein a number of SSBs transmitted based on the same beam among the candidate SSBs is larger than 2.

20. A user equipment (UE) operating in a wireless communication system, the UE comprising:

    one or more transceivers,
    one or more processors; and
    one or more memories connected to the one or more processors and storing instructions,
    wherein the instructions, based on being executed by the one or more processors, configure the one or more processors to perform all steps of a method according to any one of claims 1 to 19.

21. A device comprising:

    one or more memories, and
    one or more processors operably connected to the one or more memories,
    wherein the one or more memories, based on being executed by the one or more processors, store instructions that configure the one or more processors to perform all steps of a method according to any one of claims 1 to 19.

22. One or more non-transitory computer readable mediums storing instructions,
    wherein the instructions executable by one or more processors configure the one or more processors to perform all steps of a method according to any one of claims 1 to 19.

23. A method performed by a base station in a wireless communication system, the method comprising:

transmitting configuration information related to measurement; and

receiving measurement information based on synchronization signal/physical broadcast channel (SS/PBCH) blocks (SSBs),

wherein each SSB includes i) a primary synchronization signal (PSS) and a secondary synchronization signal (SSS) related to a cell search; and ii) a PBCH,

wherein the measurement information is determined based on the SSS,

wherein the measurement information is determined based on a demodulation reference signal (DMRS) for the PBCH in addition to the SSS based on the configuration information, and

wherein the configuration information includes resource region information related to the PBCH and/or power boosting information related to the PBCH.

24. A base station operating in a wireless communication system, the base station comprising:

one or more transceivers;

one or more processors; and

one or more memories connected to the one or more processors and storing instructions,

wherein the instructions, based on being executed by the one or more processors, configure the one or more processors to perform all steps of a method according to claim 23.

【FIG. 1】

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot (URLLC)

Mini-Slot={2,4,7} Symbols

【FIG. 2】

$$1 \text{ subframe} = 14 \cdot 2^{\mu} \text{ OFDM symbols}$$

$k = N_{grid}^{size,\mu} N_{sc}^{RB} - 1$

$N_{grid}^{size,\mu} N_{sc}^{RB} \text{ subcarriers}$

$1 \text{ resource block} = N_{sc}^{RB} \text{ subcarriers}$

Resource element(k,l)

k=0

l=0

$l = 14 \cdot 2^{\mu} - 1$

【FIG. 3】

INITIAL
CELL
SEARCH

SYSTEM
INFORMATION
RECEPTION

RANDOM ACCESS PROCEDURE

GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S301    S302    S303    S304    S305    S306    S307    S308

· DL/UL ACK/NACK
· UE CQI/PMI RI REPORT
  USING PUSCH AND PUCCH

【FIG. 4】

Subcarrier
Number

239

192

182

56

47

0

PSS

PBCH

PBCH
SSS
PBCH

PBCH

0   1   2   3

OFDM symbol number

【FIG. 5】

SSB periodicity(default:20ms)

```
┌────────┬────────────────────┬────────────┬──────────────┐
│ 5ms    │                    │////////////│              │
│ window │                    │////////////│              │
└────────┴────────────────────┴────────────┴──────────────┘
```

```
┌──────────────────────────────────────┐
│ ┌──────┐  ┌──────┐         ┌──────┐   │
│ │SSB#1 │  │SSB#2 │  · · ·  │SSB#L │   │
│ └──────┘  └──────┘         └──────┘   │
└──────────────────────────────────────┘
```

SSB burst set

【FIG. 6】

【FIG. 7】

【FIG. 8】

【FIG. 9】

OFDM symbol number

【FIG. 10】

OFDM symbol number

【FIG. 11】

【FIG. 12】

**EP 4 615 057 A1**

【FIG. 13】

```
Start
  │
  ▼
Receive configuration information related to
measurement                                    ─S1310
  │
  ▼
Report measurement information based on SSBs    ─S1320
  │
  ▼
End
```

【FIG. 14】

```
Start
  │
  ▼
Transmit configuration information related
to measurement                                  ─S1410
  │
  ▼
Receive measurement information based on SSBs   ─S1420
  │
  ▼
End
```

【FIG. 13】

100

Processor (110)
- Higher Layer Processing Unit (111)
- Physical Layer Processing Unit (115)

Antenna Unit (120)

Transceiver (130)

Memory (140)

200

Antenna Unit (220)

Transceiver (230)

Memory (240)

Processor (210)
- Higher Layer Processing Unit (211)
- Physical Layer Processing Unit (215)

40

## INTERNATIONAL SEARCH REPORT

| International application No. |
| --- |
| **PCT/KR2023/017414** |

| A. | CLASSIFICATION OF SUBJECT MATTER |
| --- | --- |

**H04W 48/10**(2009.01)i; **H04W 56/00**(2009.01)i; **H04W 24/08**(2009.01)i; **H04L 5/00**(2006.01)i; **H04W 72/04**(2009.01)i

According to International Patent Classification (IPC) or to both national classification and IPC

| B. | FIELDS SEARCHED |
| --- | --- |

Minimum documentation searched (classification system followed by classification symbols)

H04W 48/10(2009.01); H04L 1/00(2006.01); H04L 5/00(2006.01); H04W 24/08(2009.01); H04W 56/00(2009.01); H04W 72/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SSB(synchronization signal block), SS/PBCH, measurement, PBCH, DMRS, narrow BW(bandwidth), resource allocation, power boosting

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2067063 B1 (LG ELECTRONICS INC.) 16 January 2020 (2020-01-16) See paragraphs [0140]-[0267]; claim 3; and figure 10. | 1,14-16,20-24 |
| Y | | 13 |
| A | | 2-12,17-19 |
| Y | KR 10-2019-0056320 A (LG ELECTRONICS INC.) 24 May 2019 (2019-05-24) See paragraph [0009]. | 13 |
| A | US 2021-0092696 A1 (LG ELECTRONICS INC.) 25 March 2021 (2021-03-25) See paragraphs [0416]-[0445]; and figures 33-34. | 1-24 |
| A | WO 2019-098769 A1 (LG ELECTRONICS INC.) 23 May 2019 (2019-05-23) See paragraphs [0256]-[0449]; and figures 23-39. | 1-24 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 February 2024** | **21 February 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/017414** |

**C. DOCUMENTS CONSIDERED TO BE RELEVANT**

| Category* | Citation of document, with indication, where appropriate, of the relevant passages | Relevant to claim No. |
| --- | --- | --- |
| A | CATT. Discussion on measurement for conditional reconfiguration. R2-2210775, 3GPP TSG RAN WG2 #119bis-e. [Online]. 04 October 2022.<br>See section 2. | 1-24 |

Form PCT/ISA/210 (second sheet) (July 2022)

## INTERNATIONAL SEARCH REPORT
### Information on patent family members

| International application No. |
|---|
| **PCT/KR2023/017414** |

| Patent document cited in search report | | | Publication date (day/month/year) | Patent family member(s) | | | Publication date (day/month/year) |
|---|---|---|---|---|---|---|---|
| KR | 10-2067063 | B1 | 16 January 2020 | CN | 110392991 | A | 29 October 2019 |
| | | | | CN | 110392991 | B | 26 October 2021 |
| | | | | EP | 3471296 | A1 | 17 April 2019 |
| | | | | EP | 3471296 | A4 | 25 March 2020 |
| | | | | JP | 2020-503823 | A | 30 January 2020 |
| | | | | JP | 6816311 | B2 | 20 January 2021 |
| | | | | KR | 10-1951679 | B1 | 25 February 2019 |
| | | | | KR | 10-2018-0137419 | A | 27 December 2018 |
| | | | | KR | 10-2019-0018659 | A | 25 February 2019 |
| | | | | US | 10917185 | B2 | 09 February 2021 |
| | | | | US | 11057131 | B2 | 06 July 2021 |
| | | | | US | 11595140 | B2 | 28 February 2023 |
| | | | | US | 2019-0363809 | A1 | 28 November 2019 |
| | | | | US | 2020-0120622 | A1 | 16 April 2020 |
| | | | | US | 2021-0297169 | A1 | 23 September 2021 |
| | | | | WO | 2018-230984 | A1 | 20 December 2018 |
| KR | 10-2019-0056320 | A | 24 May 2019 | CN | 110419182 | A | 05 November 2019 |
| | | | | CN | 110419182 | B | 08 April 2022 |
| | | | | EP | 3512137 | A1 | 17 July 2019 |
| | | | | EP | 3512137 | A4 | 26 August 2020 |
| | | | | EP | 3512137 | B1 | 20 October 2021 |
| | | | | JP | 2021-502782 | A | 28 January 2021 |
| | | | | JP | 7074853 | B2 | 24 May 2022 |
| | | | | KR | 10-2031098 | B1 | 11 October 2019 |
| | | | | US | 10602535 | B2 | 24 March 2020 |
| | | | | US | 11375528 | B2 | 28 June 2022 |
| | | | | US | 2019-0166611 | A1 | 30 May 2019 |
| | | | | US | 2020-0196338 | A1 | 18 June 2020 |
| | | | | WO | 2019-098677 | A1 | 23 May 2019 |
| US | 2021-0092696 | A1 | 25 March 2021 | CN | 110945805 | A | 31 March 2020 |
| | | | | CN | 110945805 | B | 19 July 2022 |
| | | | | EP | 3661081 | A1 | 03 June 2020 |
| | | | | EP | 3661081 | A4 | 26 May 2021 |
| | | | | EP | 3661081 | B1 | 13 April 2022 |
| | | | | JP | 2020-528714 | A | 24 September 2020 |
| | | | | JP | 2023-154075 | A | 18 October 2023 |
| | | | | JP | 7335226 | B2 | 29 August 2023 |
| | | | | US | 11206624 | B2 | 21 December 2021 |
| | | | | WO | 2019-022574 | A1 | 31 January 2019 |
| WO | 2019-098769 | A1 | 23 May 2019 | CN | 111557081 | A | 18 August 2020 |
| | | | | CN | 111557081 | B | 23 May 2023 |
| | | | | EP | 3713136 | A1 | 23 September 2020 |
| | | | | EP | 3713136 | A4 | 29 September 2021 |
| | | | | JP | 2021-503795 | A | 12 February 2021 |
| | | | | JP | 7177832 | B2 | 24 November 2022 |
| | | | | US | 11540191 | B2 | 27 December 2022 |
| | | | | US | 2021-0176687 | A1 | 10 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- NR and NG-RAN Overall Description. *3GPP TS 38.300*
- User Equipment (UE) procedures in idle mode and in RRC inactive state. *3GPP TS 38.304*
- Medium Access Control (MAC) protocol. *3GPP TS 38.321*
- Radio Link Control (RLC) protocol. *3GPP TS 38.322*
- Packet Data Convergence Protocol (PDCP). *3GPP TS 38.323*
- Radio Resource Control (RRC) protocol. *3GPP TS 38.331*
- Service Data Adaptation Protocol (SDAP). *3GPP TS 37.324*
- Multi-connectivity; Overall description. *3GPP TS 37.340*
- Application layer support for V2X services; Functional architecture and information flows. *3GPP TS 23.287*
- System Architecture for the 5G System. *3GPP TS 23.501*
- Procedures for the 5G System. *3GPP TS 23.502*
- Policy and Charging Control Framework for the 5G System; Stage 2. *3GPP TS 23.503*
- Non-Access-Stratum (NAS) protocol for 5G System (5GS); Stage 3. *3GPP TS 24.501*
- Access to the 3GPP 5G Core Network (5GCN) via non-3GPP access networks. *3GPP TS 24.502*
- User Equipment (UE) policies for 5G System (5GS); Stage 3. *3GPP TS 24.526*